# FASCICULE DE BREVET EUROPEEN

(11) **EP 3 585 952 B1**
(45) Date de publication et mention de la délivrance du brevet: **23.03.2022**
(21) Numéro de dépôt: 17713162.0
(22) Date de dépôt: 21.02.2017
(51) Int. Cl.: E04B 1/35, E04B 1/74

(54) **SUPERSTRUCTURE DE BÂTIMENT AUTOSTABLE SEMI-MOBILE, A VOLUME SOUS VIDE AUTO-ISOLANT, ACCUMULATEUR D'ÉLECTRICITÉ.**
SELBSTSTEHENDER UND SELBSTISOLIERENDER GEBÄUDEAUFBAU MIT VAKUUMHÜLLE, AKKUSTROM
SELF-STANDING AND SELF-ISOLATING BUILDING SUPERSTRUCTURE WITH VACUUM SHELL OF AIR, ELECTRICITY ACCUMULATOR

(43) Date de publication de la demande: 01.01.2020
(73) Titulaire: Chavanne, Bruno, 37310 Azay-sur-Indre (FR)
(72) Inventeur: Chavanne, Bruno, 37310 Azay-sur-Indre (FR)
(86) Numéro de dépôt international: PCT/EP2017/053917
(87) Numéro de publication internationale: WO 2017/162388

(56) Documents cités:
- WO-A1-95/04197
- US-A1- 2015 064 375

## Description

L'invention se situe dans le domaine de la production industrielle en série de bâtiments d'habitation et d'accueil à haut niveau d'isolation thermique, phonique, sismique, électromagnétique, et aux infiltrations d'eau ; sans fondation, sans utilisation de béton, montables et démontables à l'infini, stockant leur propre production d'électricité d'origine solaire dans leur coque en très basse tension de sécurité.

Il est démontré que la production et l'utilisation du béton engendre entre 5 et 6 % des émissions de gaz à effet de serre anthropique dans le monde. De plus, les réserves de sable à grains anguleux se raréfient.

On connaît le problème des habitations construites en dur à une époque ou leur environnement était sain et agréable, condamnées à être détruites suite à une dégradation environnementale. Le bâtiment n'est pas récupérable et sa démolition produit des déchets polluants.

Le problème des habitations non isolées et dont la rénovation coûteuse ne donne pas entière satisfaction est connu.

On constate qu'à long terme, certains matériaux exposés à l'air et aux rayonnements solaires se dégradent par oxydation et photo-oxydation. L'humidité et le gel les dégradent également.

Les habitations construites en zone inondable et/ou sismique et qui ne résistent ni aux entrées d'eau, ni aux séismes, entraînent des indemnisations assurantielles catastrophiques.

On soupçonne un effet néfaste sur la santé à long terme des rayonnements électromagnétiques qui envahissent les habitations.

Les effets néfastes de la pollution de l'air par les microparticules et les épandages chimiques agricoles sont connus.

Il est démontré que la production d'énergie renouvelable passe par l'utilisation de l'énergie solaire et que son stockage est problématique.

Le courant alternatif basse tension 220 volts provoque des accidents, avec mort d'hommes ou des séquelles à vie, la raison en est qu'il contracte les muscles, ce qui n'est pas le cas du courant continu. La tension alternative a été développée afin de pouvoir modifier la tension du courant et de le transporter en très haute tension, mais son transport induit des pertes. Ce modèle qui date de plus d'un siècle, n'a plus lieu d'être si l'habitation produit ses propres besoins en électricité. De nombreux appareils électriques et électroniques pour habitations mobiles et navires de plaisance sont en tension continue 5 ou 12 volts.

L'utilisation de panneaux d'isolation sous vide (P.I.V.), incorporés ou non dans les murs, les planchers et les couvertures est connu.

On citera les brevets :
FR2880639 / WO2013088075 / WO2013088077 / WO2014128379 / W2015/155438 / EP2860320

Ces brevets décrivent des structures porteuses de panneaux P.I.V.

Les panneaux P.I.V. ont l'inconvénient d'être fragiles, donc non porteurs. De plus, il est difficile de contrôler leur niveau de vide à long terme, à 10, 30, 100 ans. Du fait qu'ils soient non porteurs, il est compliqué d'éviter les ponts thermiques entre l'extérieur et l'intérieur du bâtiment, la structure porteuse nécessaire n'est pas isolante.

Des brevets proposent des enveloppes de panneaux P.I.V. beaucoup plus résistantes, fabriquées avec du papier cartonné plastifié.

On citera les brevets suivants :
WO2015135656 / WO2016165984

Le document WO-95/04197-A1 divulgue une superstructure de bâtiment selon le préambule de la revendication 1.

La présente invention propose de remédier à tous les inconvénients précités pages 1 et 2.

Pour rappel, on sait que la meilleure isolation thermique qui soit est le vide de tout gaz. Afin de rigidifier, de rendre plus solide, d'économiser des matériaux et d'insonoriser la structure du bâtiment, l'invention utilise un effet physique : l'effet dit de Magdebourg.

Quand une des deux faces d'une paroi est sous vide de gaz, la force exercée sur cette paroi est égale à la pression atmosphérique, soit 1013 hPa ou mbar au niveau de la mer. Cette force va être utilisée dans la totalité de la superstructure. Afin d'empêcher que les parois sur lesquelles s'exerce la pression atmosphérique ne se cintrent pas, il va être placé derrière ces parois des granules sensiblement sphériques, poreux ou creux et rigides. Les granules seront versés en vrac sans aucun liant et n'auront donc que de faibles points de contact entre eux, ce qui limitera la transmission des flux thermiques par conduction. Les granules poreux ou creux seront soumis à un vide de gaz poussé, ce qui supprimera la transmission des flux thermiques par convection.

Précision sémantique : le terme coque désigne en architecture des voiles de béton généralement courbes. Le terme coque utilisé dans la présente demande englobe les volumes de l'assise au dessus du niveau du sol, de tous les murs extérieurs plans ou courbes et de la couverture plane ou courbe.

### Exposé de l'invention

Résumé de l'invention : Superstructure de bâtiment autostable, thermo-isolante, phoniquement isolante, sismo-isolante, aqua-isolante, électromagnéto-isolante, dont le volume interne global est rempli de granules légers rigides, dans lesquels les pièces d'habitation sont immergées. Les granules légers sont de forme sphérique, poreux ou creux, sans liant et versés en vrac. L'enveloppe externe de la coque de la superstructure et les parois des pièces d'habitation sont composées de plaques rigides jointives dont les faces internes sont garnies d'une pluralité de nervures en forme d'ondulations. Une peau étanche couvre la totalité des surfaces externes de l'enveloppe de la coque de la superstructure et des parois des pièces d'habitation. La peau étanche est constituée de feuilles couvrant la face externe de chaque plaque rigide jointive et sont reliées par leurs bordures étanches. Lesdites feuilles sont constituées d'une feuille de papier carton, étanchéifiée par une pellicule intérieure de Copolymère d'Éthylène/ Alcool Vinylique (EVOH) et rendue incombustible et imputrescible par chloroparaffinage de la face extérieure. Dans les embrasures et les baies sont encastrés des blocs-baies étanches aux gaz, de forme extérieure conique. Tout le volume constitué par les granules en vrac, les plaques, les blocs-baies et la peau étanche est sous vide de gaz. Ce vide de gaz est contrôlé à vie par une pompe à vide installée in situ. L'enveloppe externe et les parois sont contreventées par le volume de granules rigidifié par la pression atmosphérique. Une pluralité de couches à polarisation ionique, vaporisées sur des feuilles polymères métallisées sous vide superposées, est insérée entre les plaques rigides et la peau étanche. L'ensemble des feuilles ioniques, séparées par des films électrolytiques intercalés, constituent des accumulateurs électrochimiques ou des supercondensateurs à couches minces sous vide de gaz. Le courant électrique très basse tension de sécurité est prélevé directement à l'arrière des cloisons de doublage.

Exposé : L'invention propose que la totalité de la superstructure d'un bâtiment soit composée d'une unique coque continue isolante, dite en cocon, et que tous les éléments soient de composition identique. Les murs de refend et les planchers sont de la même composition que la coque. Un élément ne peut être qualifié de mur, de plancher, de toit, que par sa position dans l'espace et par rapport aux autres éléments. La structure de cette coque est constituée d'une pluralité de plaques rigides jointives enserrant des granules artificiels ou d'origine végétale qui remplissent la totalité du volume formé par les plaques. Le volume global de la superstructure est formé par une pluralité de plaques rigides jointives formant une enveloppe externe qui englobe tout le bâtiment. Les pièces d'habitation ou d'accueil forment des sous-volumes dont les parois sont constituées par une pluralité de plaques rigides jointives formant des cavités internes. Le volume de la coque, des murs de refend et des planchers, résulte de la soustraction au volume global des sous-volumes. L'épaisseur de la coque, qui peut varier, est déterminée par la position des sous-volumes dans le volume global.

Les sous-volumes, qui sont des unités isolées, constituent les pièces d'habitation ou professionnelles, ils sont immergés dans les granules.

### Descriptif des figures

Le descriptif détaillé des figures a été placé à la fin de cette description, pages 15 à 17, pour une meilleure concision.
Figure 1 : Représentation des volumes (1) et (2), symbole vide (10).
Figure 2 : Vue d'un bâtiment, dont le mur de pignon est ouvert.
Figure 3 : Zoom +1,5 sur le mur de pignon ouvert de la figure 2.
Figure 4 : Détail de la figure 2, schéma de principe de la pompe à vide.
Figure 5 : Vue de deux planchers et d'un mur, haubanés.
Figure 6 : Représentation ouverte plus détaillée de la coque.
Figure 7 : Représentation des parois intérieures chaînées par câbles.
Figure 8 : Élément de mur pré-assemblé avec les entretoises (7).
Figure 9 : Élément de couverture pré-assemblé avec les entretoises (7).
Figure 10 : Zoom sur les équerres de liaison de la figure 8.
Figure 11 : Zoom sur les plaques de liaison de la figure 9.
Figure 12 : Vue d'un demi bloc-baie avec son encastrement conique.
Figure 13 : Représentation schématique d'une feuille de peau (8) avec bordures en V fermé (12) et joint d'étanchéité d'angle (33).
Figure 14 : Représentation schématique d'une feuille de peau (8) avec bordures en V ouvert (13) et joint d'étanchéité d'angle (34).
Figure 15 : Représentation schématique de la peau (8) avec bordures à angle droit (14) et un joint d'étanchéité d'angle (35).
Figure 16: Vue en coupe de 2 bordures en V fermé (12) et pince-ressort Ω (23).
Figure 17 : Schéma d'un angle intérieur d'un sous-volume avec bordures en V fermé (12), pince-ressort Ω (23) et agrafe tripode (24).
Figure 18 : Vue en coupe de 2 bordures en V ouvert (13) et pince-ressort Ω (23).
Figure 19 : Schéma d'un angle extérieur d'un volume avec bordures en V ouvert (13), 3 pinces-ressorts Ω (23) et agrafe tripode (24).
Figure 20 : Vue d'une baie et d'un demi bloc-baie encastré (9), peau (8) avec bordures (14).
Figure 21 : Schéma de principe du contreventement des plaques (3).
Figure 22 : Représentation d'un haubanage à l'intérieur d'un plancher.
Figure 23 : Boulon/ vis auto-taraudeuse (25).
Figure 24 : Montage d'un boulon (25) sur une ossature (46).
Figure 25 : Vue en coupe d'un exemple de réalisation d'une maison de plain-pied avec une coque en portique (31) et (32).
Figure 26 : Vue de l'enrobage complet d'une maison avec la peau (8).
Figure 27 : Vue d'une superstructure posée sur un lit de sable (28) avec des portiques-chevrons (29).
Figure 28 : Schéma de principe d'un accumulateur d'électricité.
Figure 29 : Vue aérienne d'une maison avec jardin intérieur (49).
Figure 30 : Chapeau de fermeture de la coque.
Figure 31 : Coupe d'une maison avec jardin intérieur, ventilation (53).

### Réalisation de l'invention

Pour rappel, l'invention propose que la totalité de la superstructure d'un bâtiment soit composée d'une unique coque continue isolante, dite en cocon, et que tous les éléments soient de composition identique, y compris les murs de refend et les planchers.

Un élément ne peut être qualifié de mur, de plancher, de toit, que par sa position dans l'espace et par rapport aux autres éléments.

La structure de cette coque est constituée d'une pluralité de plaques rigides (3) enserrant des granules artificiels ou d'origine végétale (4) qui remplissent la totalité du volume formé par les plaques.

Le volume global (1) de la superstructure est formé par une pluralité de plaques rigides jointives (3) formant une enveloppe externe qui englobe tout le bâtiment. C'est également l'enveloppe externe rigide de la coque.

Les pièces d'habitation ou d'accueil forment des sous-volumes (2) qui sont constitués par une pluralité de plaques rigides jointives (3) formant des cavités internes.

Le volume de la coque, des murs de refend et des planchers, résulte de la soustraction au volume global (1) des sous-volumes (2).

L'épaisseur de la coque, qui peut varier, est déterminée par la position des sous-volumes (2) dans le volume global (1).

Les sous-volumes (2), qui sont des unités isolées, constituent les pièces d'habitation ou professionnelles, ils sont immergés dans les granules (4).

Les plaques (3) sont planes ou arrondies, parallèles entre elles ou non. Une plaque peut avoir la taille d'un pan de mur ou d'un pan de toit ou d'un plancher.

Les plaques ont leur face interne à la coque, aux murs de refend et aux planchers, garnie d'une pluralité de nervures (5) parallèles entre elles en forme d'ondulations ou de dents de pignon-crémaillère. La forme des nervures est choisie en fonction de la taille des granules. La direction des nervures (5) est orthogonale aux contraintes de cisaillement s'exerçant sur la structure de la coque, des murs de refend et des planchers.

Les nervures (5) seront horizontales dans le cas d'un mur vertical ou d'un pan de toit sur lequel s'exerce la force de gravité.

Les plaques (3) sont renforcées par des nervures voûtées (6), également fixées sur les faces internes de ces plaques et sur les nervures (5). Ces nervures voûtées (6) sont perpendiculaires aux nervures (5). Leur épaisseur, leur largeur, leur longueur sont adaptées aux efforts transversaux qui s'exercent sur les plaques.

Les embrasures nécessaires à la création des baies de portes et de fenêtres, au passage d'une pièce à une autre pièce, au passage des aérations, des conduits de fumée, des gaines électriques et hydrauliques, sont ménagées dans les plaques se faisant face.

Les plaques (3) de la coque qui se font face, sont avantageusement reliées intérieurement par des entretoises (7).

Les entretoises (7) sont collées sur les deux faces internes des plaques (3) se faisant face, ce montage permet de créer des éléments de mur (31) et de couverture (32) pré-assemblés qu'il suffira de remplir de granules après assemblage de ceux-ci.

Les éléments pré-assemblés (31) et (32) sont reliés entre eux par des équerres intérieures (15) et des équerres extérieures (16), ainsi que par des plaques de liaison (21). Les équerres sont en acier forgé.

Les équerres (15) et (16) sont vissées sur les entretoises (7) et les nervures voûtées (6) avec des vis traversantes (17).

Les sous-volumes (2), donc les pièces d'habitation, peuvent être ceinturés par une pluralité de câbles (19). Dans ce cas, les câbles sont placés sur les nervures (6). L'extrémité de certaines nervures voûtées (6) de plaques perpendiculaires entre elles, sont reliées par des équerres de liaison/ guide-câble (18).

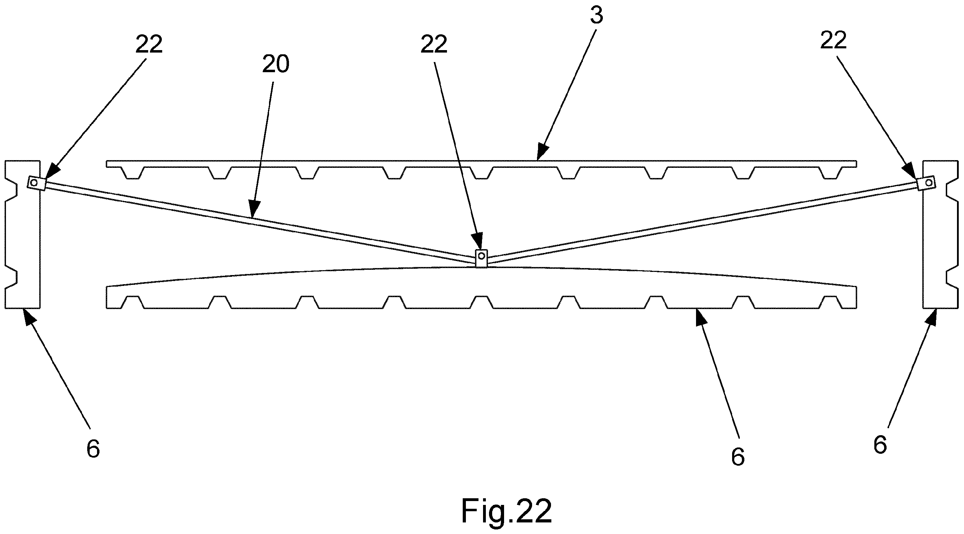

Des haubans (20) peuvent relier certaines nervures voûtées (6) des planchers et des murs de façade. Ces haubans (20) traversent les granules (4) des murs de pignon, des murs de refend et des planchers (voir Figure 22).

Les haubans métalliques (20) internes à la coque, aux murs de refend, aux planchers, sont fixés sur les nervures voûtées (6) grâce à des chapes (22). Les haubans sont des tiges métalliques ou des câbles.

Le volume interne de la coque, des murs de refend et des planchers, est intégralement rempli de granules (4), rigides et durs, minéraux ou non, de forme sphérique, poreux ou creux et sans aucun liant pour les agglomérer.

Plusieurs types de granules légers peuvent être employés :
- Des granules légers, de diamètre 30±3 mm, fabriqués par l'expansion et la réticulation à 200°C d'un géopolymère issu des « boues rouges », elles mêmes rejets de la fabrication de l'alumine,
- L'argile expansée à 1100°C, fabriquée avec les boues de lavage des carrières ou bien avec des argiles dites nobles,
- Du verre de récupération, expansé,
- Des granules végétaux type noyaux de fruits, par exemple des noyaux de pêches, nectarines, cerises.

Tout autre type de granules légers artificiels peut être employé.

Il sera judicieux de placer des granules lourds en partie basse de la superstructure. Un mélange de différentes granulométries est possible.

Précision sémantique : les cadres en béton préfabriqués qui ceinturent les baies de fenêtres et de portes et utilisés en construction traditionnelle sont nommés blocs-baies.

Dans la présente demande, des blocs-baies vont être utilisés aussi bien pour garnir les embrasures pratiquées pour les baies des ouvrants que les embrasures pratiquées pour le passage des circuits électriques, électroniques, hydrauliques, d'aérations, des conduits de fumée.

Dans chaque embrasure est encastré un bloc-baie préfabriqué (9). Ce bloc-baie est étanche aux gaz, il est fabriqué en bois composite résine-plastique / bois, le plastique sera issu de la récupération du polyéthylène, polypropylène ou du polychlorure de vinyle. Une réalisation en bois massif enrobé par une couche de résine étanche moulée par injection est également possible. Ce bloc-baie a la particularité d'avoir une surface extérieure d'encastrement de forme générale conique. Les dimensions de la partie saillante à l'extérieur de la superstructure, donc du volume (1), sont supérieures aux dimensions de la partie saillante à l'intérieur de la superstructure, donc des sous-volumes (2). Chaque face ceinturant le bloc-baie présente une pente de 3 à 5 %.

Ledit bloc-baie fait saillie de chaque côté de la coque, sa profondeur totale minimum correspond à l'épaisseur de la coque augmentée des deux épaisseurs de chaque côté de la coque et des reliefs en façade. Lesdites épaisseurs sont constituées par l'épaisseur des plaques de doublage (45), la hauteur de l'ossature en bois (46), l'épaisseur des panneaux de parement (30), la hauteur des portiques-chevrons (29).

Si ledit bloc-baie est encastré dans un mur de refend ou un plancher, sa profondeur correspond aux épaisseurs de ceux-ci augmentées de la largeur des bordures d'étanchéité bloc-baie/ peau. Nota : la peau est décrite plus loin.

Un bloc-baie (9) peut être remplacé par une simple traversée de cloison étanche en forme de tube conique alésé, ceci pour les passages de câbles et tuyaux. Dans ce cas, l'étanchéité entre la traversée conique et la peau (8) est classique, avec des joints d'étanchéité circulaires et des flasques de serrage (non représentés].

Une peau (8) étanche aux gaz couvre la totalité des surfaces externes de l'enveloppe de la coque et des parois des pièces d'habitation, elle est constituée de feuilles de mêmes forme et dimensions que les plaques (3), les feuilles sont assemblées entre elles.

Les feuilles sont constituées de feuilles de papier carton (36), étanchéifiées sur leur face côté plaque par une couche de Copolymère d'Éthylène/ Alcool Vinylique (EVOH) et rendues incombustibles et non dégradables par chloroparaffinage pénétrant à chaud de leur face externe. Des ouvertures, correspondant aux embrasures ménagées dans les plaques (3), sont ménagées dans les feuilles.

Les bordures des feuilles cartonnées sont pliées vers l'extérieur (de la coque) sur une largeur de 20 mm, les bords sont relevés et forment avec la feuille cartonnée, soit un angle en V fermé (12), soit un angle en V ouvert (13), soit un angle droit (14).

Ces pliages sont destinés à relier les feuilles entre elles par le pincement des couples de bordures relevées qui sont en contact.

Les pliages en angle droit (14) sont destinés à relier les blocs-baies étanches avec les bordures relevées des ouvertures pratiquées dans les feuilles. La forme et les dimensions des ouvertures correspondent strictement aux dimensions des embrasures des plaques (3).

Les pliages en V fermé (12) sont destinés à relier les feuilles qui forment un angle saillant entre elles.

Les pliages en V ouvert (13) sont destinés à relier les feuilles qui forment un angle rentrant entre elles.

Avant pliage, les pliures seront marquées par rainage des feuilles cartonnées à une distance de 20 mm des bords.

A la fabrication, des pièces d'étanchéité moulées (33),(34) et (35) sont collées à chaque angle des feuilles cartonnées, sur les bordures relevées. Ceci afin de garantir l'étanchéité des angles.

Les pièces (33) sont destinées aux bordures en angle en V fermé.

Les pièces (34) sont destinées aux bordures en angle en V ouvert.

Les pièces (35) sont destinées aux bordures en angle droit.

Les bordures en angle droit (14) des feuilles cartonnées sont serrées sur les blocs-baies étanches par des plaques de serrage (non représentées) vissées sur les blocs-baies. Une couche d'étanchéité en élastomère est placée entre la bordure (14) et le bloc-baie.

Les bordures en V fermé (12) et en V ouvert (13) des feuilles cartonnées sont réunies par le pressage des pinces-ressorts (23) à profil en forme de lettre oméga majuscule Ω. Une couche d'étanchéité en élastomère sera placée entre les couples de bordures (12) ou (13), rendant étanche l'assemblage des feuilles cartonnées.

Ces pinces-ressorts Ω ont sensiblement la longueur de chacun des côtés des feuilles cartonnées et des longueurs des côtés des plaques.

Des agrafes tripodes (24) viennent pincer les trois bordures réunies dans les angles des sous-volumes ou du volume.

Ainsi l'ensemble de la superstructure et le dessous de l'assise du bâtiment sont-ils enveloppés dans une peau étanche aux gaz. Ainsi les intérieurs des sous-volumes (2), donc des pièces d'habitation, sont-ils couverts par une peau étanche aux gaz.

Le volume fermé et étanche aux gaz, enveloppé par la peau étanche, est soumis à un vide poussé, inférieur à 1 hPa. La mise sous vide de gaz complète se fera à long terme afin d'éliminer les molécules de gaz enfermées dans les cellules fermées des granules poreux ou creux.

C'est pourquoi le volume interne de la coque, des murs de refend et des planchers, est relié à une pompe à vide (10) de façon permanente. La pompe à vide est équipée d'un système de détection et d'alarme afin de prévenir tout fonctionnement trop important de ladite pompe, signe d'une entrée de gaz accidentelle dans le volume fermé et étanche.

Ce système de contrôle sera relié au réseau informatique mondial (@) par réseau filaire ou hertzien, ainsi l'étanchéité du volume étanche sera surveillée. Un vacuomètre mécanique de sécurité indiquera en permanence le niveau de vide.

Cette liaison permanente au réseau informatique mondial constitue une alarme à toute agression extérieure du type effraction sur la coque.

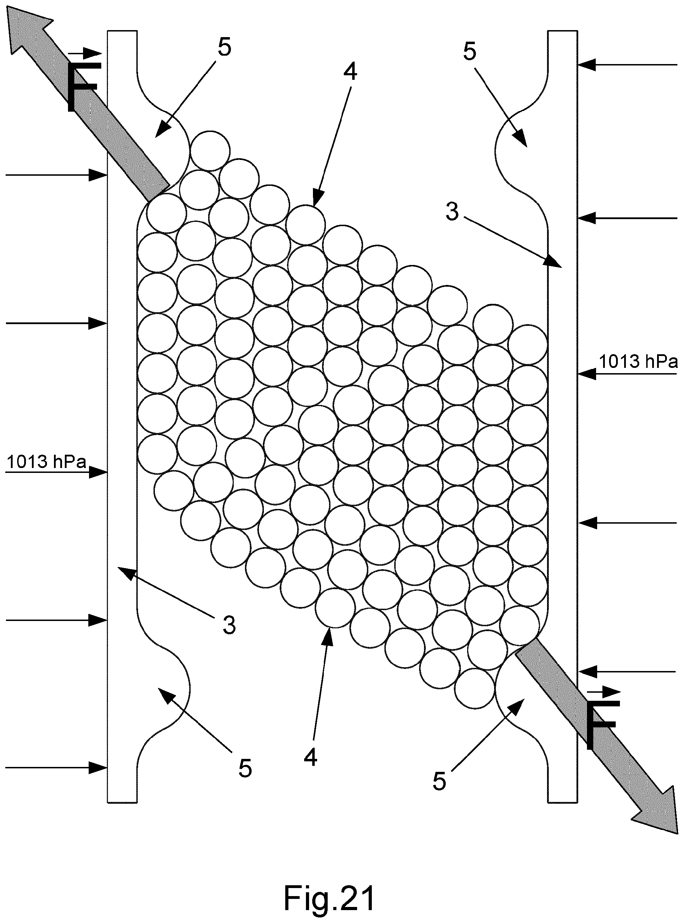

Le vide de gaz assure la rigidité de l'ensemble par effet dit de Magdebourg. Les nervures (5) des faces internes des plaques (3) sont encastrées dans les granules (4) dont le volume est rendu rigide par la pression des plaques (voir figure 21). Les planchers étant rigidifiés, ils sont aussi silencieux qu'un plancher de béton.

Le volume de granules sous vide de gaz assure l'isolation thermique et phonique ainsi que le contreventement des plaques. La conductivité thermique de la coque varie de 0,006 à 0,004 watt/ (mètre. °K), en fonction de la nature des granules et du nombre d'entretoises (7).

La qualité optimale de l'isolation sera maintenue durant toute la durée de vie du bâtiment grâce à la pompe à vide (10).

Les blocs-baies (9), encastrés dans la coque sont immobilisés par l'effet dit de Magdebourg et la pression des granules sur leurs faces d'appui extérieures encastrées dans la coque.

Une pluralité de films polymères (40) métallisés sous vide (37) et recouverts de couches à polarisation ioniques (38), est insérée entre les plaques (3) et la peau étanche (8) ; des électrolytes solides, gélifiés ou liquides (39) sont intercalés entre les couches à polarisation ionique.

L'ensemble des feuilles minces constitue un accumulateur électrochimique ou un supercondensateur à films séparateurs électrolytiques solides ou gélifiés ou liquides, sous vide de tout gaz.

Les couches à ions positifs sont reliées ensemble et constituent l'anode de l'accumulateur (41). Les couches à ions négatifs sont reliées ensemble et constituent la cathode de l'accumulateur (42).

Les sorties de l'anode et de la cathode de la peau étanche s'effectuent entre les couples de bordures jointives (12) ou (13). La couche élastomère entre les deux bordures permet l'étanchéité autour de l'anode et de la cathode.

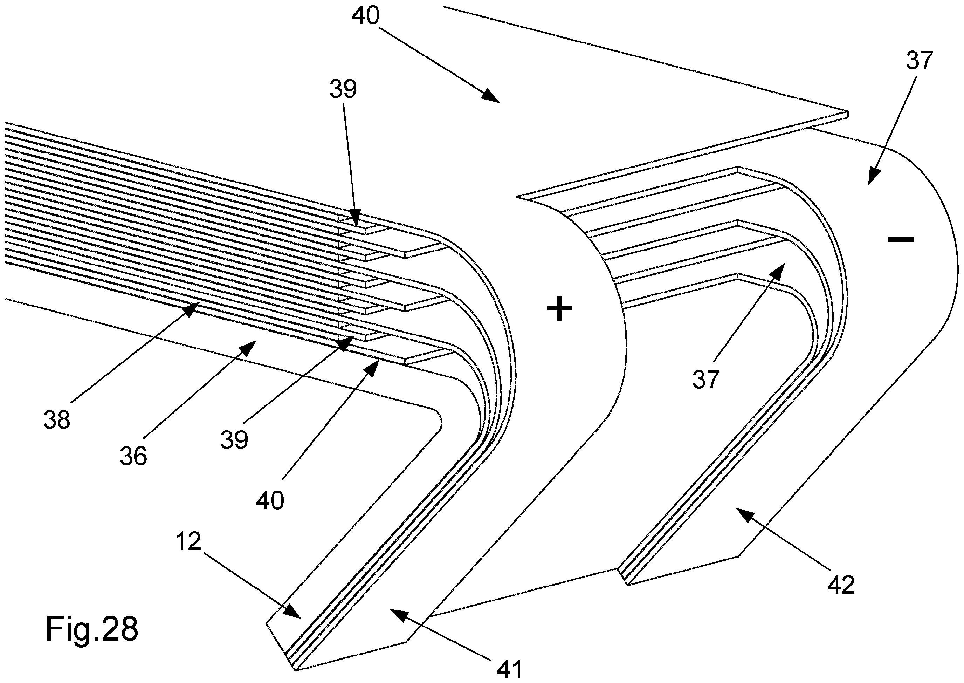

Les éléments au sein d'un accumulateur sont branchés en parallèle entre eux (voir figure 28). À un accumulateur correspond une plaque (3). Les accumulateurs sont branchés en série entre eux et délivrent une tension de 24 volts. Le modèle de branchement est celui des batteries.

La polarité des supercondensateurs est déterminée par la polarité de la charge délivrée par les panneaux photovoltaïques (47), elle est donc déterminée par le branchement de ceux-ci.

Le courant électrique très basse tension continue de sécurité est prélevé directement derrière les cloisons de doublage pour alimenter des prises et appareils électriques protégés des courts-circuits.

La pluralité de couches à polarisation ionique offre une barrière à tout champ électromagnétique extérieur. La superstructure est ainsi électromagnéto-isolante.

La superstructure est posée sur un lit de sable (28) qui permet d'absorber tous les mouvements ou les secousses du sol. La hauteur du sable est en fonction de l'aléa sismique, de 0,5 m à 2 m de hauteur. Ce lit de sable s'étend sur une surface plus grande de 20 % que la surface d'appui de la superstructure. Il est particulièrement avantageux d'utiliser des sables impropres à la fabrication du béton, de type sable du désert. Les grains de sable du désert étant arrondis, ils ne sont que plus appropriés à l'absorption des mouvements ou secousses du sol.

La superstructure, n'étant pas fixée dans le sol et étant autostable, est antisismique.

Des boulons/ vis auto-taraudeuses (25) de fabrication spéciale à coupelle d'étanchéité (26) sont prévus pour la fixation sur champ de certaines ossatures en bois (46) sur les feuilles cartonnées, ainsi que certains équipements fixes domestiques, type ventilation mécanique à récupération d'énergie calorifique. L'étanchéité des feuilles cartonnées, percées pour le passage des vis, est assurée par un joint torique (27) en élastomère, encastré dans la gorge de la coupelle (26) et comprimé sur la feuille cartonnée par le serrage de la vis (25). La coupelle d'étanchéité et le boulon/ vis auto-taraudeuse sont forgés et usinés en une seule pièce afin d'assurer leur étanchéité.

Les boulons / vis auto-taraudeuses (25) sont toujours vissés sur des emplacements repérés par des marques imprimées sur les feuilles cartonnées. Au dos de ces marques, les accumulateurs sont évidés sur un diamètre de 30 mm. Ces marques sont faces aux nervures (5) et (6) afin d'avoir une longueur de vissage maximum.

Afin de limiter la quantité de granules utilisée, des sous-volumes (11) non étanches sont placés au sein des granules quand l'épaisseur de la coque est trop importante.

Les plaques (3) sont avantageusement fabriquées en bois lamellé-collé à lamelles orientées type OSB. Les nervures (5) sont intégrées à la fabrication des plaques ou rapportées par collage. Les nervures (5) sont en bois massif, les nervures voûtées (6) perpendiculaires aux nervures (5) sont en bois lamellé-collé tout comme les entretoises (7).

Les portiques-chevrons (29) permettent la pose de tout bardage, plaques de bois, lattes de toit, panneaux photovoltaïques, ils seront de préférence simplement posés sans fixation sur la coque.

Les ossatures (46) permettent la pose de plaques de plâtre (45), plaques OSB, toutes plaques de doublage. L'espace entre les plaques de doublage et les feuilles cartonnées permet le passage des circuits d'eau, des ventilations et des réseaux intranet et internet.

A l'intérieur des sous-volumes et derrière les plaques de doublage, des accumulateurs thermiques sous forme de volumes d'argile crue (44) sont posés sur l'assise du bâtiment.

Tous les matériaux accumulateurs thermiques peuvent être utilisés à l'intérieur des sous-volumes (2). Tous les matériaux réfléchissant les rayons du soleil peuvent être utilisés à l'extérieur du volume (1).

Une toile goudronnée sera placée sous la superstructure avant sa pose.

En zone inondable, les portes et portes-fenêtres seront étanches aux infiltrations d'eau et s'ouvriront vers l'extérieur, les entrées de tuyaux seront également étanches. Un anti-retour sera installé à la sortie de chaque évacuation des eaux usées. L'étanchéité sera assurée jusqu'à la plus haute crue historiquement constatée. En cas d'inondation, seuls les parements extérieurs seront noyés dans l'eau.

Le bâtiment est ainsi aqua-isolant.

Remarques générales concernant le montage de la superstructure :
La totalité de la superstructure, y compris les aménagements intérieurs, seront préfabriqués et pré-assemblés en atelier, seul un assemblage par vissage sera utilisé sur le lieu de l'élévation de la construction. Les granules seront soufflés à partir d'un camion citerne.

Les éléments de mur (31) et de couverture (32) seront vibrés afin que les granules occupent tout le volume intérieur et soient tous en contact entre eux.

Les panneaux (3) couvrant les pans supérieurs de la coque sont coupés à distance du sommet de la coque, un chapeau (55) de largeur 0,60 mètre sera mis en place au sommet de la coque après injection et vibration des granules dans la coque.

Les blocs-baies coniques sont encastrés dans les embrasures sans aucune fixation mécanique ni chimique, la pression des granules et la dépression de l'air les immobilisent.

L'ensemble de la superstructure reste réparable, démontable, modifiable et transférable sur un autre lieu.

Un seul orifice d'aspiration des gaz est nécessaire et suffisant pour la totalité de la superstructure.

La pompe à vide (10) est placée avantageusement à l'intérieur de la superstructure.

### Considérations

Pour une habitation de 250 m² comprenant une véranda de 50 m², la surface des supercondensateurs ou des accumulateurs électrochimiques peut être de 2000 m² si les surfaces extérieures sont utilisées, y compris le dessous de l'assise du bâtiment. Multiplié par 10 paires de couches ioniques, cela peut représenter 20000 m² d'accumulation électrostatique ou électrochimique. La tension continue de sortie est de 24 volts, en très basse tension de sécurité. Il est simple de placer un micro onduleur/ transformateur 220 volts alternatif en sortie de prise électrique en cas de nécessité. Il est à remarquer que les onduleurs/ transformateurs tension continue 24 volts/ tension alternative 220 volts, placés actuellement en sortie de panneaux photovoltaïques, ont une durée de vie limitée et consomment une fraction de l'électricité délivrée par lesdits panneaux. Leur suppression est un progrès.

Les granules, fabriqués avec les boues rouges extraites de la bauxite, comportent des traces d'uranium 238 et de thorium 232, leur radioactivité sera absorbée par les 24 couches métalliques ioniques des accumulateurs et, étant sous vide, ne sera pas dispersée dans l'air.

### Exemple de réalisation

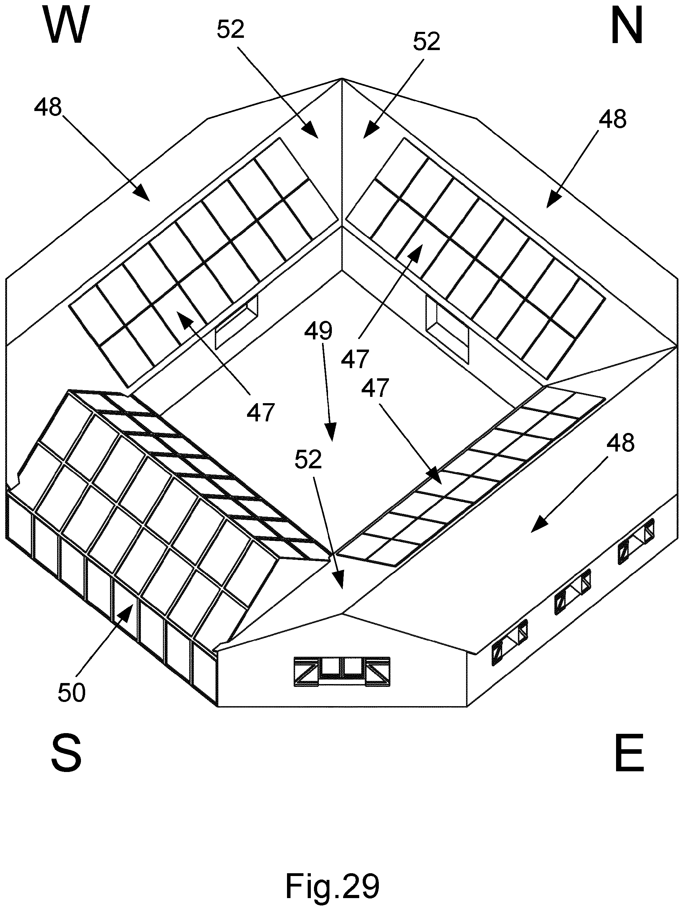

Un exemple de réalisation est proposé sous la forme d'une habitation de plain-pied (figure 29), cette habitation comporte un jardin intérieur (49) dont la surface au sol a une valeur minimale de 25 % de la surface d'appui totale du bâtiment sur le sol.

L'isolation étant pratiquement absolue, il n'est pas nécessaire de construire une habitation à étage, ce type de construction étant surtout destiné à la récupération de la source de chaleur émise par l'étage inférieur.

La captation de l'énergie solaire nécessite une surface d'exposition au soleil maximale. Cette surface est limitée avec un immeuble à étages.

Le modèle d'habitation proposé comporte une grande surface de toiture (48) et (52) sur laquelle peuvent être installés des panneaux photovoltaïques et/ou des panneaux solaires.

Ce modèle d'habitation à ouverture centrale et pans de toits intérieurs (52) cachés, permet de rendre les panneaux photovoltaïques/ panneaux solaires (47) invisibles à un observateur situé à l'extérieur du bâtiment et non placé en hauteur.

L'implantation de la superstructure sans fondation permet d'intégrer la végétation au sein de l'habitation, le système racinaire d'un ou plusieurs arbres (51) plantés dans ce jardin pouvant se développer sans obstacle.

Une excavation (54), de la surface du jardin (49), est creusée et remplie de terre végétale avant l'implantation du bâtiment.

L'air enrichi en oxygène grâce aux plantations feuillues plantées dans le jardin intérieur (49) est capté, filtré et injecté à l'intérieur de l'habitation par la ventilation mécanisée (53).

Dans l'hémisphère nord, la façade exposée côté sud est constituée d'une véranda (50), source de captage de l'énergie solaire grâce au chauffage de l'air intérieur de la véranda par le rayonnement solaire. Cet air chaud est injecté dans l'habitation par la ventilation mécanisée (53).

Dans l'hémisphère sud, la véranda sera côté nord.

Les futurs progrès dans le rendement des cellules solaires permettront de placer les panneaux photovoltaïques à l'intérieur de la véranda (50), ce qui permettra aux arbres plantés dans le jardin de se développer en hauteur sans risque d'isoler les panneaux (47) du rayonnement solaire.

L'habitation est semi-mobile, elle peut être déplacée après démontage et remontage. Une fois le bâtiment démonté, le terrain redevient vierge de toute construction.

### Descriptif détaillé des figures

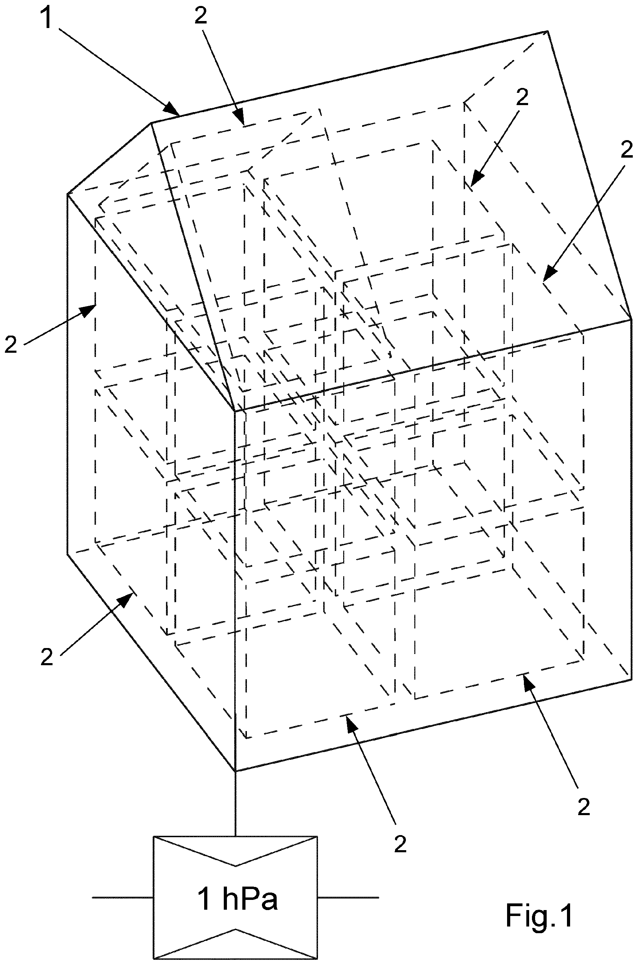

Figure 1 : Représentation du volume global (1) englobant des sous-volumes (2), l'ensemble est mis sous vide par la pompe à vide (10). Cette figure illustre schématiquement la revendication 1.

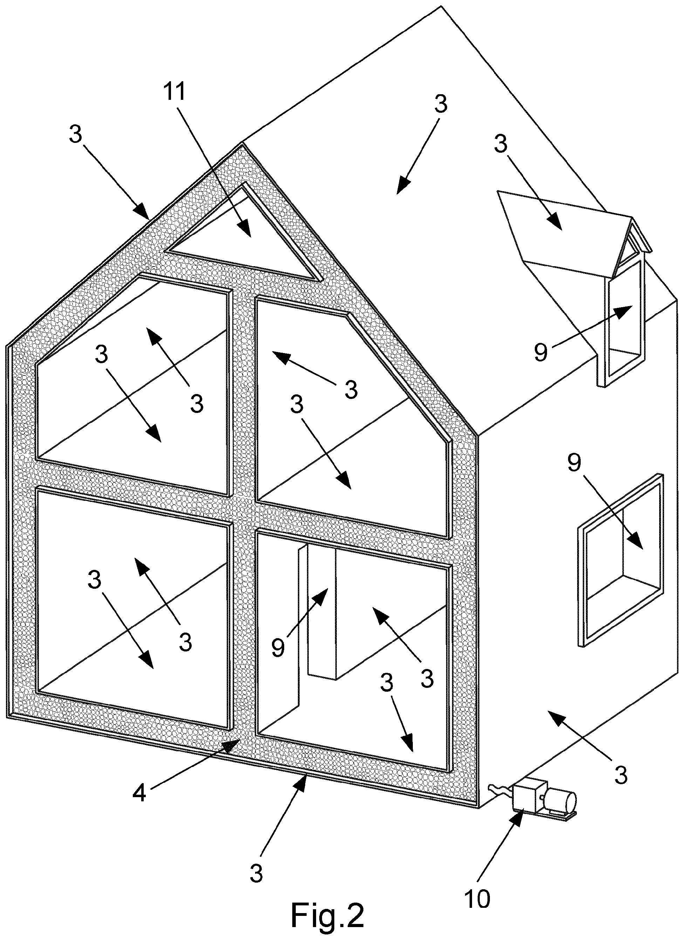

Figure 2 : Vue d'un bâtiment, dont le mur de pignon est ouvert, montrant les plaques (3), les granules (4) ainsi que la pompe à vide (10).

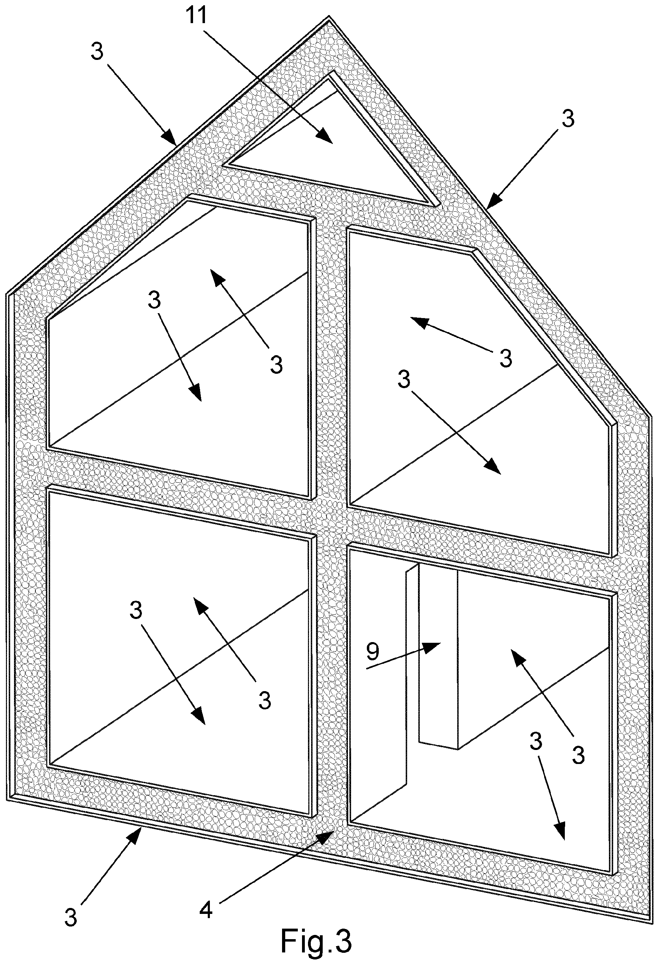

Figure 3 : Zoom +1,5 sur le mur de pignon ouvert de la figure 2.

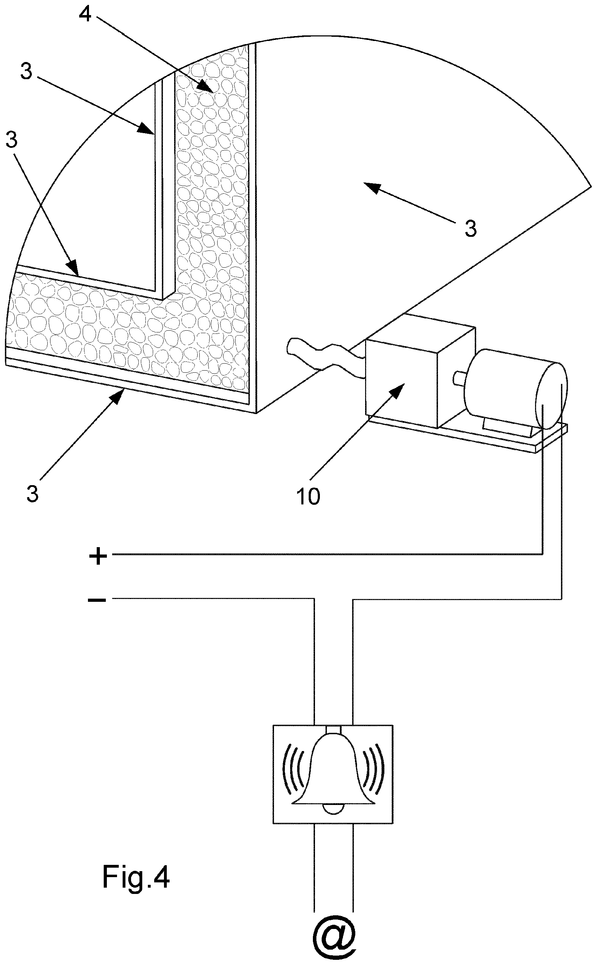

Figure 4 : Détail de la figure 2, schéma de principe de la pompe à vide alimentée par un circuit électrique en courant continu +/-, une alarme signale tout fonctionnement trop important de ladite pompe, le circuit de contrôle est relié au réseau informatique mondial (@).

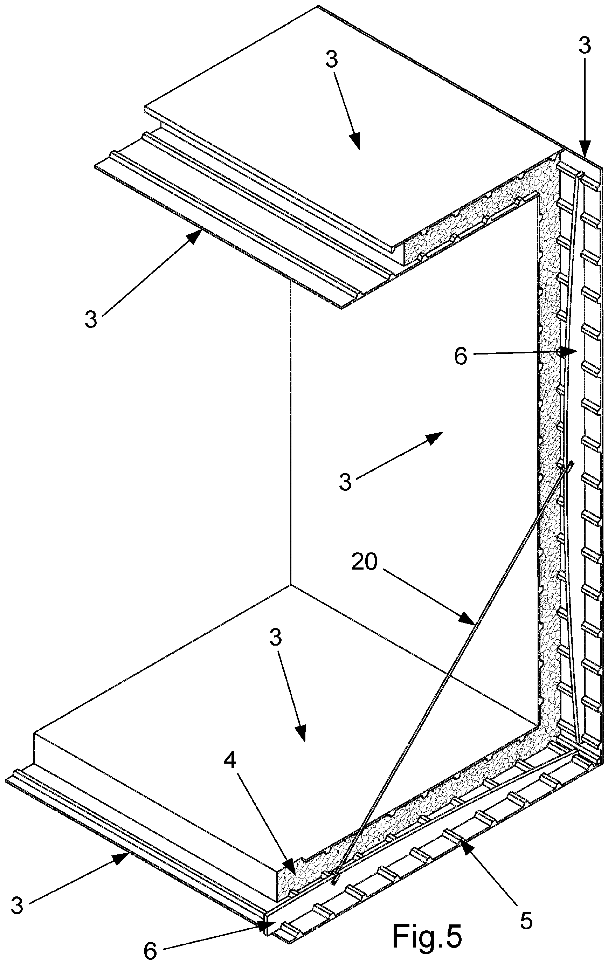

Figure 5 : Vue partielle de deux planchers et d'un mur, l'assise et un mur sont haubanés par le hauban (20) fixé aux nervures voûtées (6).

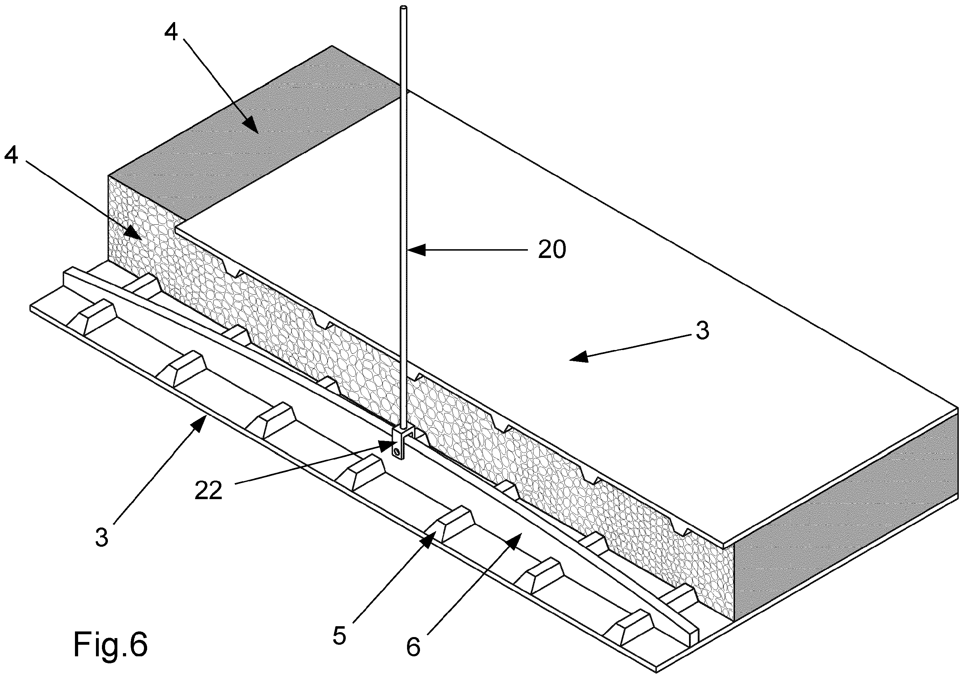

Figure 6 : Vue partielle en coupe plus détaillée d'une partie quelconque de la coque montrant les éléments constitutifs de ladite coque : plaques nervurées (3), granules (4), hauban (20) et chape (22).

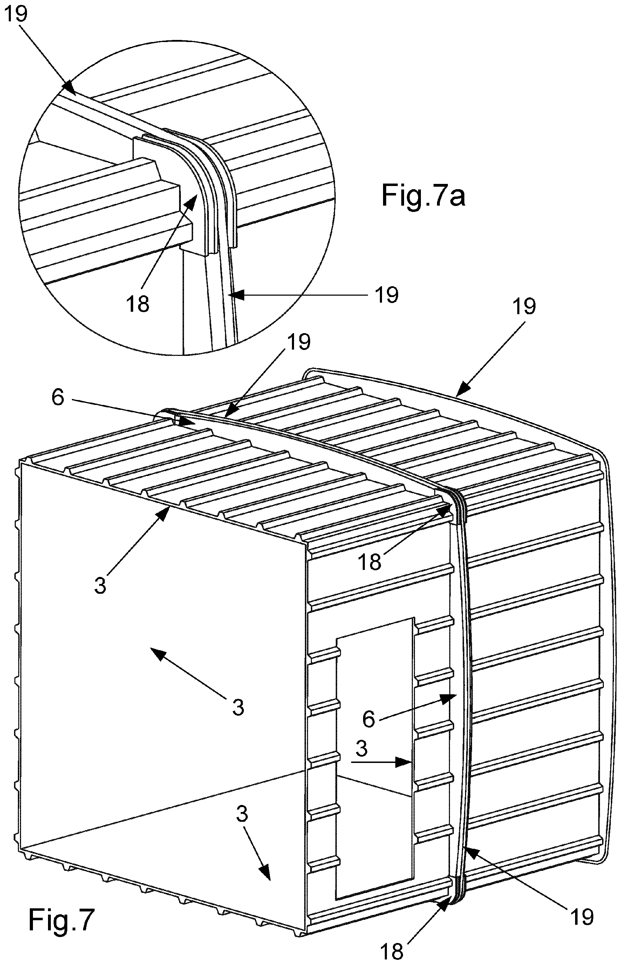

Figure 7 : Représentation des parois intérieures chaînées par un câble sans fin (19). Un deuxième câble (19) est en attente. Les équerres de liaison (18) maintiennent les nervures voûtées (6) et servent de guide-câble.

Figure 7A : zoom de la figure 7 sur une équerre de liaison (18).

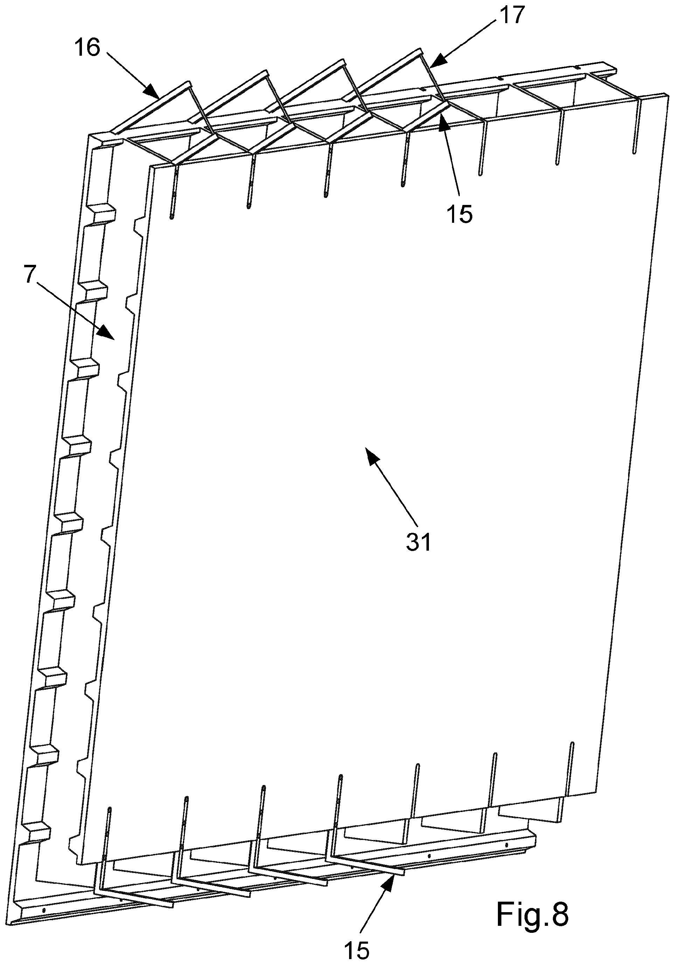

Figure 8 : Élément de mur pré-assemblé (31) constitué de plaques (3) collées sur des entretoises (7), des équerres de liaison (15) et (16) permettent d'assembler différents éléments entre eux. Les équerres de liaison inférieures (15) permettent d'assembler les éléments (31) à l'assise. Le remplissage de l'élément par des granules évite le voilement des entretoises (7) sous contraintes mécaniques. Les vis (17) relient les équerres entre elles en traversant les entretoises (7).

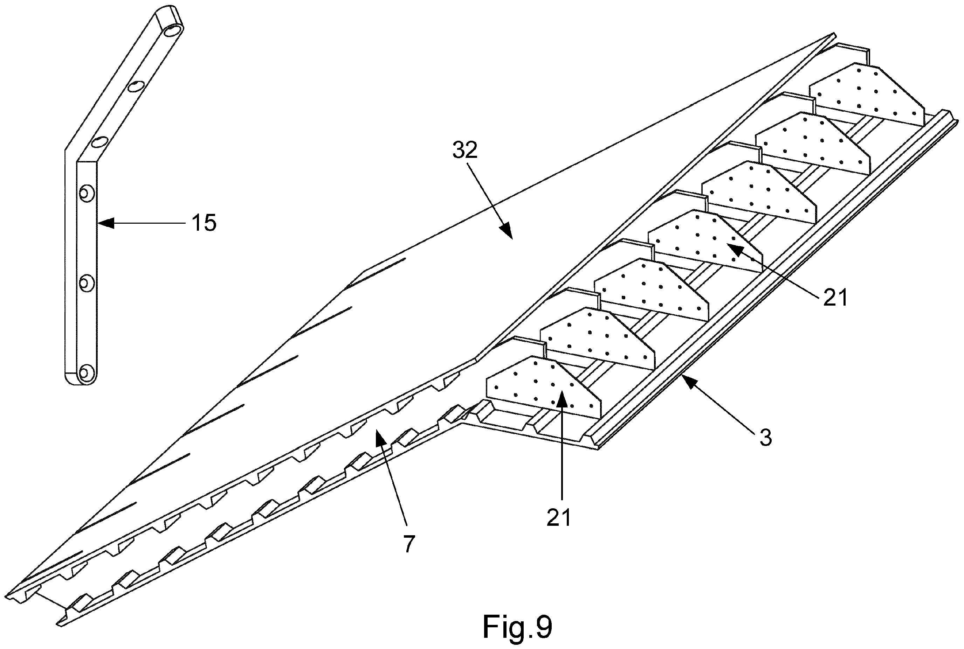

Figure 9 : Élément de toit pré-assemblé (32) constitué de plaques (3) collées sur des entretoises (7). Les plaques de liaison (21), situées sous le faîtage du toit, permettent l'assemblage des éléments (32) entre eux. Le remplissage des éléments par des granules évite le voilement des entretoises (7) sous contraintes mécaniques. Les panneaux (3) sont coupés à distance du sommet du toit afin de laisser la place à un chapeau (55) de 0,60 mètre de large et maintenu en place uniquement par la dépression. Vue d'une équerre intérieure (15).

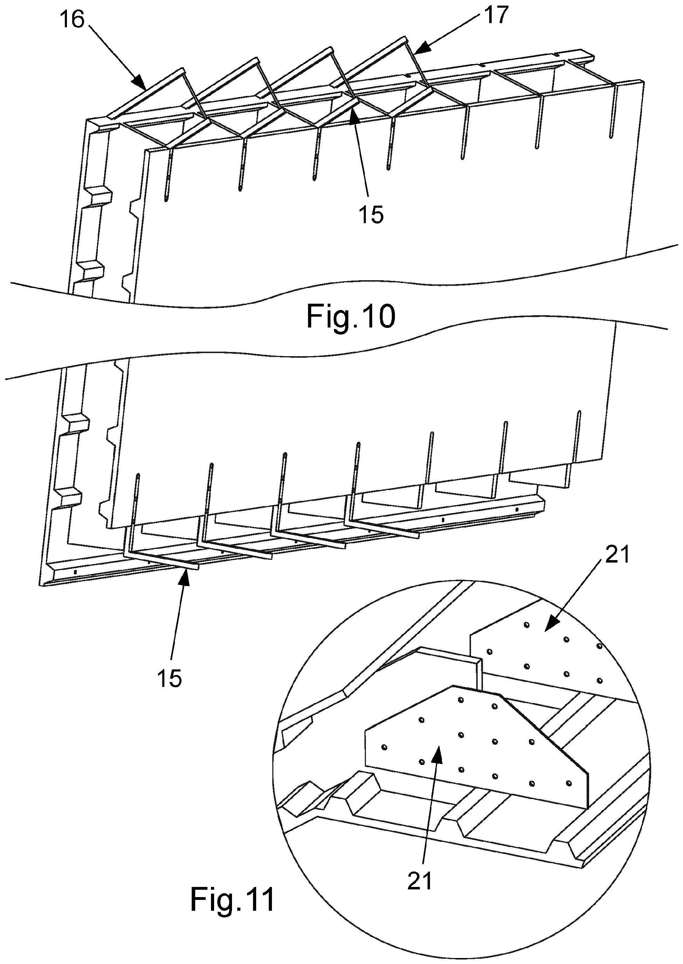

Figure 10 : Zoom sur les équerres de liaison (15) et (16).

Figure 11 : Zoom sur les plaques de liaison (21).

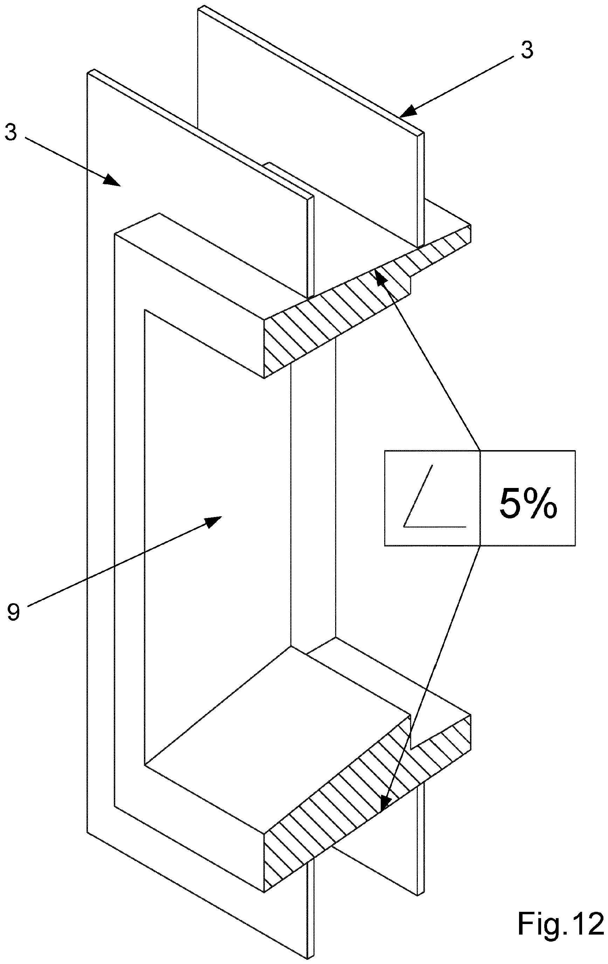

Figure 12 : Vue d'un demi bloc-baie (9) dont les quatre faces d'appui ont une pente de 5 % croissante vers l'extérieur du bâtiment.

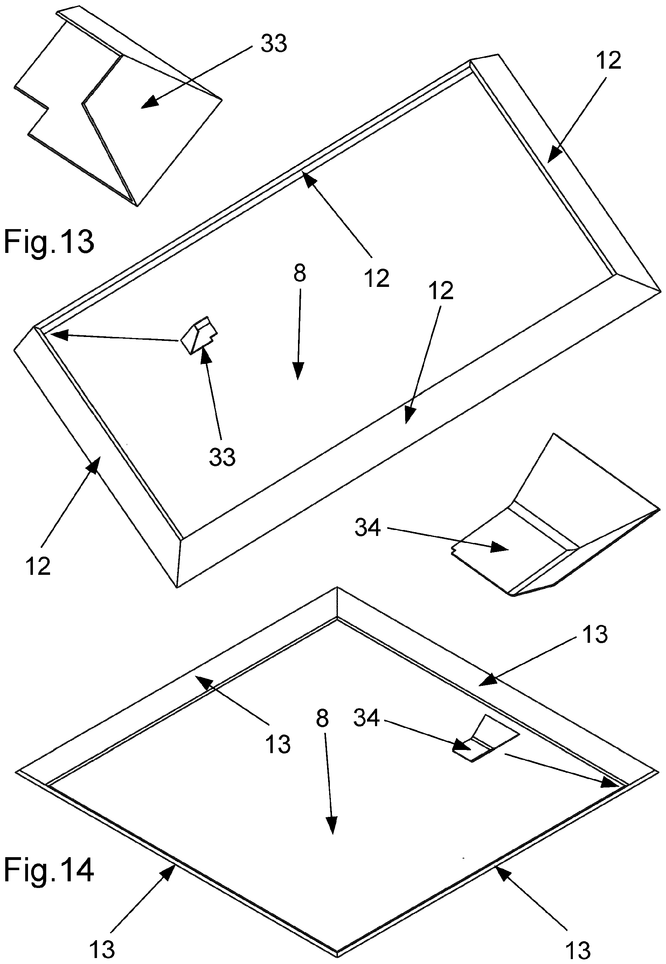

Figure 13 : Représentation schématique d'une feuille de peau (8) avec bordures en V fermé et joint d'étanchéité d'angle (33). Quatre joints d'étanchéité d'angle sont collés dans les quatre angles de la feuille (8). Zoom sur le joint (33).

Figure 14 : Représentation schématique d'une feuille de peau (8) avec bordures en V ouvert et joint d'étanchéité d'angle (34). Quatre joints d'angle d'étanchéité sont collés dans les quatre angles de la feuille (8). Zoom sur le joint (34).

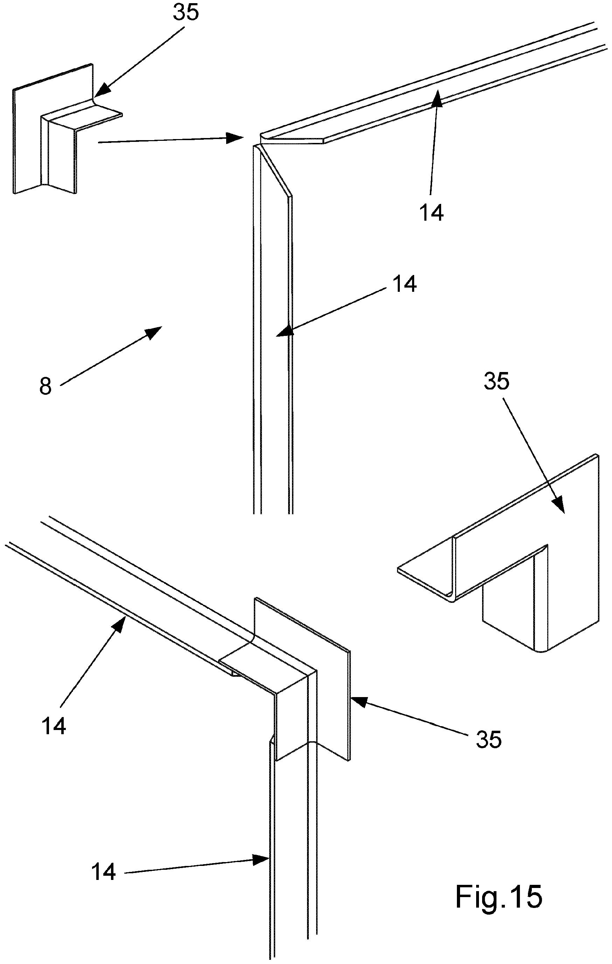

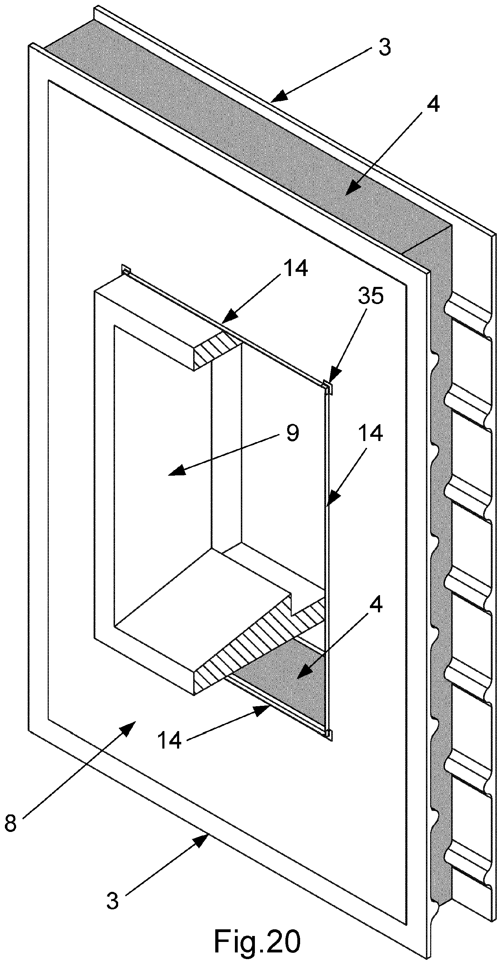

Figure 15 : Représentation schématique d'une feuille de peau (8) avec bordures à angle droit et un joint d'étanchéité d'angle (35). Quatre joints d'étanchéité d'angle sont collés sur les quatre angles d'une ouverture dans la peau (8), voir Fig.20. Zoom sur le joint (35).

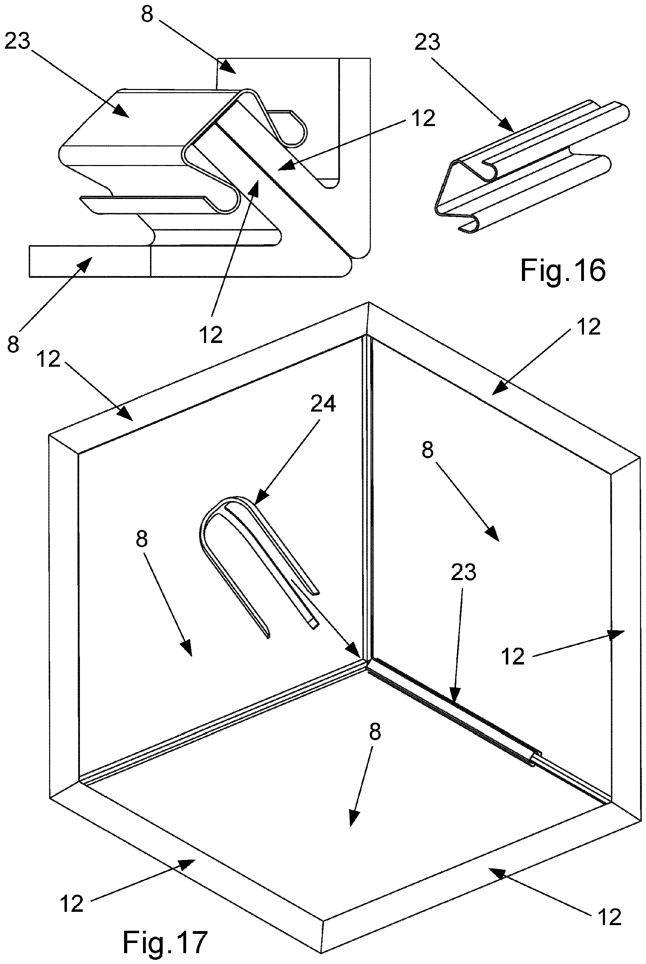

Figure 16 : Vue en coupe de deux bordures jointives en V fermé (12) et pince-ressort (23) en forme de lettre oméga majuscule Ω.

Figure 17 : Schéma d'un angle intérieur d'un sous-volume avec deux bordures jointives en V fermé (12) pincées par une pince-ressort Ω (23) et vue grossie d'une agrafe tripode (24) prête à être posée.

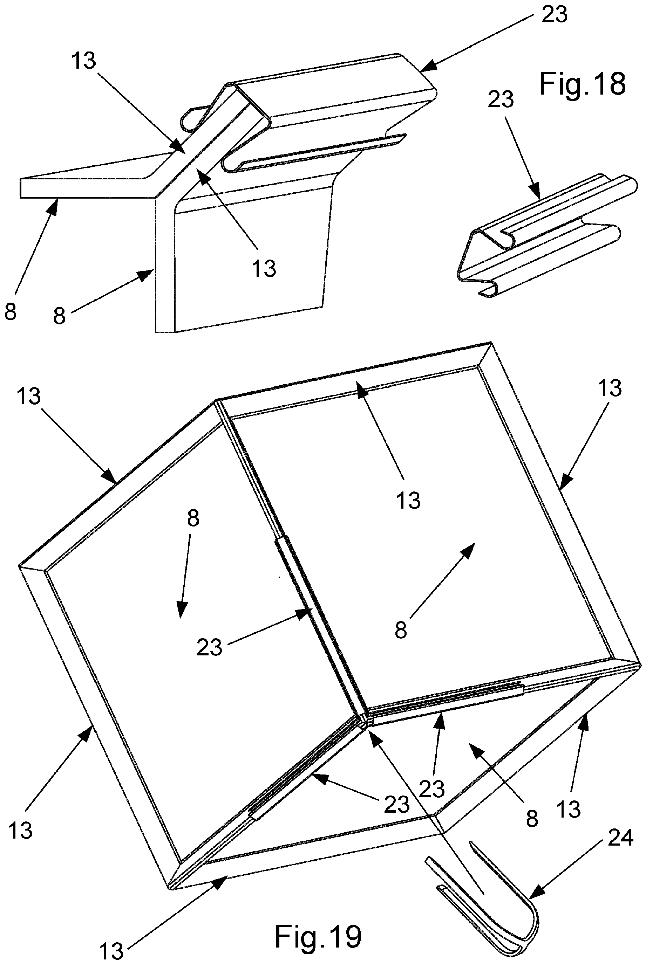

Figure 18 : Vue en coupe de deux bordures jointives en V ouvert (12) et pince-ressort Ω (23).

Figure 19 : Schéma d'un angle extérieur d'un volume avec six bordures jointives en V ouvert (13) pincées par trois pinces-ressorts Ω (23) et vue grossie d'une agrafe tripode (24).

Figure 20 : Vue d'une baie et d'un demi bloc-baie étanche encastré (9), les bordures (14) sont serrées sur le bloc-baie étanche par des plaques de serrage vissées dessus.

Figure 21 : Schéma de principe du contreventement des plaques (3). Les nervures (5) s'arc-boutent dans les granules (4) rigidifiés par la pression atmosphérique qui s'exerce sur la face extérieure de chaque plaque (3). Forces de réaction : F

Figure 22 : Représentation d'un haubanage (20) noyé dans les granules à l'intérieur d'un plancher.

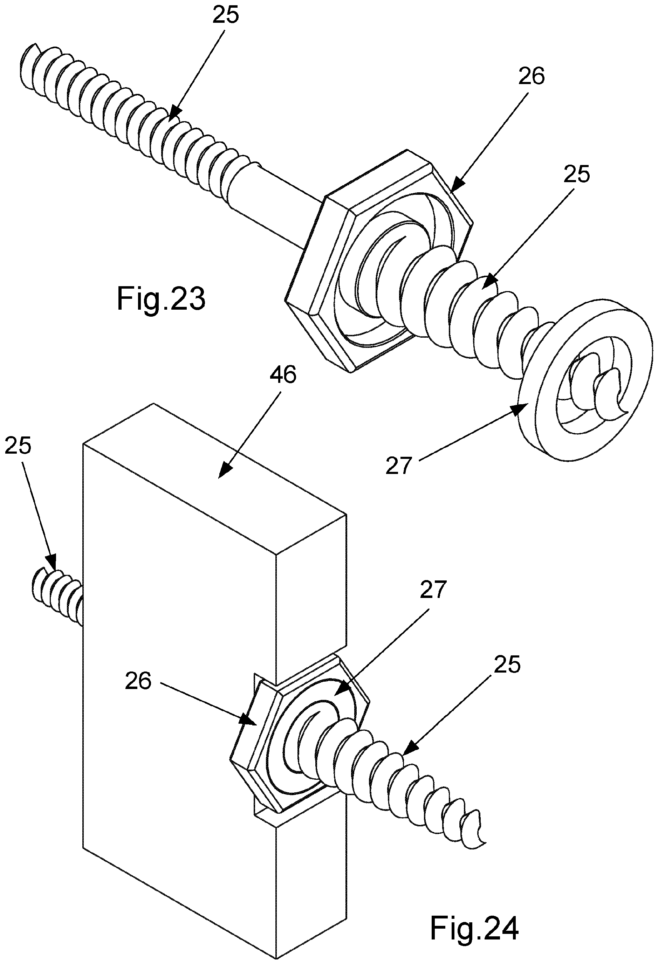

Figure 23 : Boulon / vis auto-taraudeuse (25) à coupelle d'étanchéité (26). Un tore (27) en élastomère s'encastre dans la gorge circulaire de la coupelle d'étanchéité.

Figure 24 : Montage d'un boulon (25) sur une ossature (46), le joint torique (27) est monté dans sa coupelle (26). Un écrou non représenté serre l'ossature sur une plaque (3).

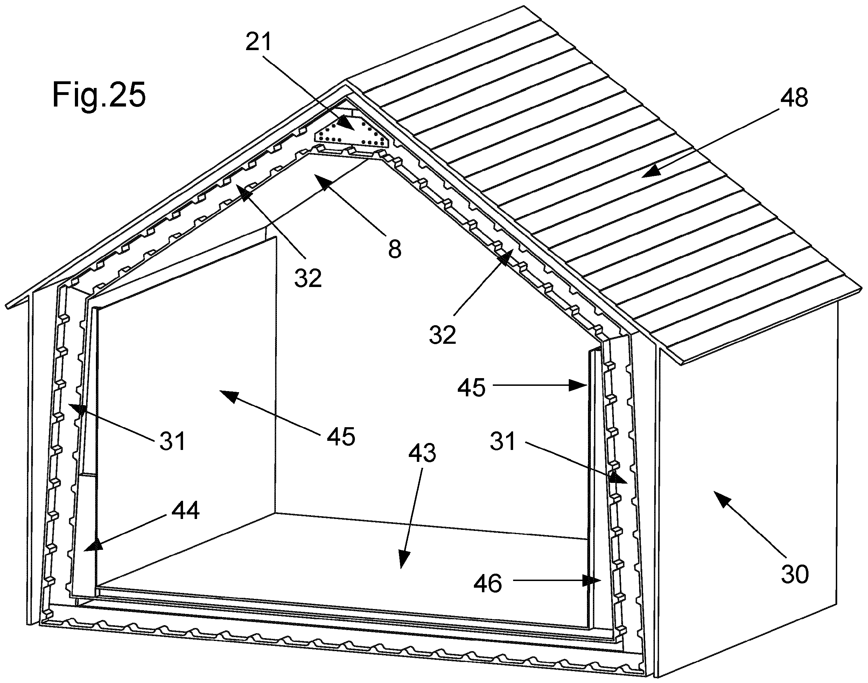

Figure 25 : Vue en coupe d'un exemple de réalisation d'une maison de plain-pied avec une coque en portique (31) et (32). Les plaques de parement (30) et le toit (48) sont fixés sur les portiques-chevrons (29). Les plaques de doublage (45) sont fixées sur les ossatures (46). Un accumulateur thermique (44) est représenté.

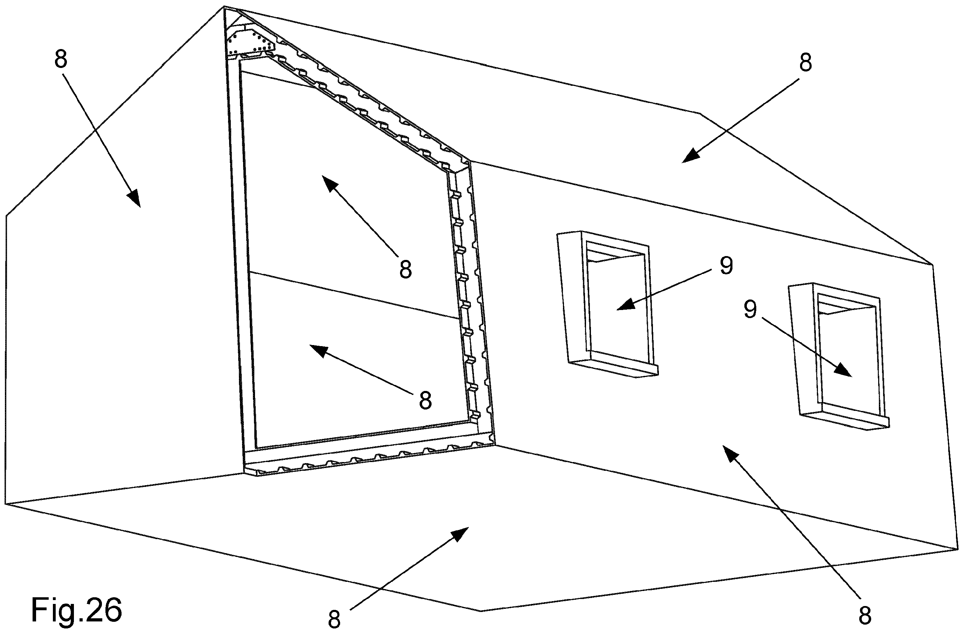

Figure 26 : Vue de l'enrobage complet d'une maison avec la peau (8).

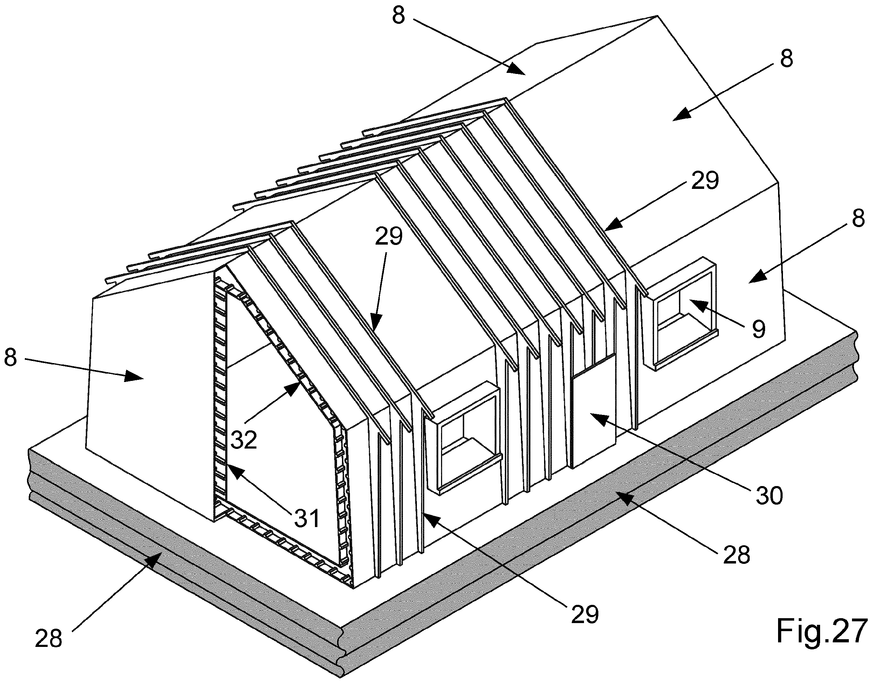

Figure 27 : Vue d'une superstructure posée sur un lit de sable (28) avec une pluralité de portiques-chevrons (29). Une plaque de bardage extérieure (30) est représentée.

Figure 28 : Schéma de principe d'un accumulateur d'électricité. L'épaisseur de l'accumulateur est de 0,2-0,3 millimètre pour dix éléments accumulateurs. L'épaisseur de l'anode/ cathode est de 100 micromètres.

Figure 29 : Vue aérienne d'une maison avec jardin intérieur (49). Les panneaux photovoltaïques/ solaires (47) sont fixés sur les pans de toit (52) coté jardin intérieur (49). La véranda (50) est située coté sud dans l'hémisphère nord.

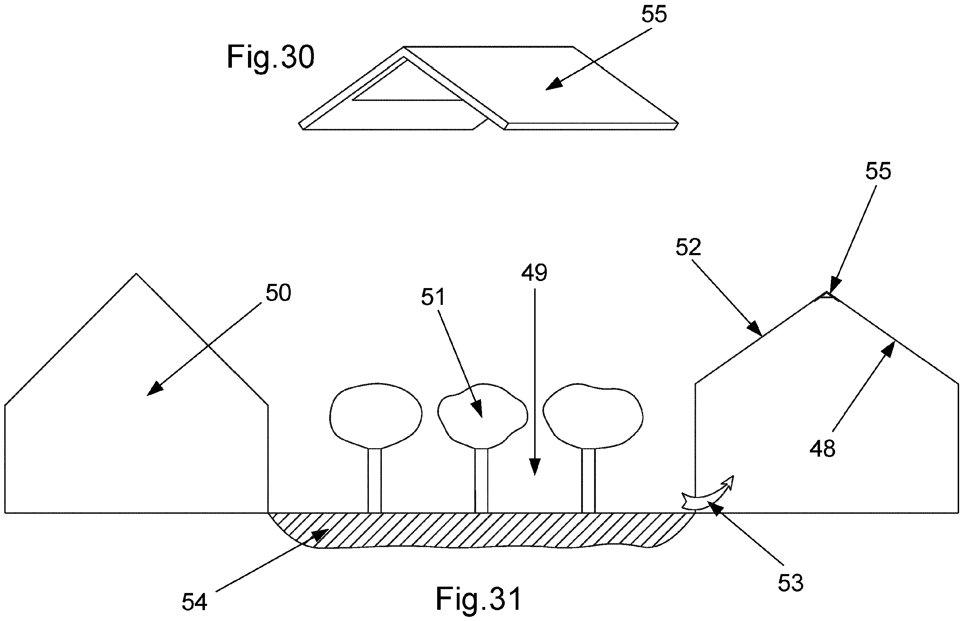

Figure 30 : Chapeau fermant le sommet de la coque après injection complète des granules (4). Il est maintenu en place par la dépression.

Figure 31 : Coupe d'une maison avec jardin intérieur, entrée basse de la ventilation (53), excavation préalable (54) du jardin intérieur et remplissage de terre végétale, chapeau de fermeture (55).

### Nomenclature

- 1-: Volume global 2- Sous-volume 3- Plaque 4- Granules
- 5-: Nervure 6- Nervure voûtée 7- Entretoise
- 8-: Peau / Peau-accumulateur électrique
- 9-: Bloc-baie étanche 10- Pompe à vide
- 11-: Sous-volume non étanche aux gaz
- 12-: Bordure en V fermé 13- Bordure en V ouvert
- 14-: Bordure à angle droit 15- Équerre intérieure
- 16-: Équerre extérieure 17- Vis de liaison équerres
- 18-: Équerre de liaison/ guide câble 19- Câble 20- Hauban
- 21-: Plaque de liaison 22- Chape 23- Pince-ressort Ω
- 24-: Agrafe tripode 25- Boulon / vis auto-taraudeuse
- 26-: Coupelle 27- Joint torique 28- Sable
- 29-: Portique-chevron 30- Panneau de bardage
- 31-: Élément de mur 32- Élément de couverture
- 33-: Étanchéité V fermé 34- Étanchéité V ouvert
- 35-: Étanchéité angle droit 36- Feuille cartonnée
- 37-: Pellicule métallique 38- Couche à polarisation ionique
- 39-: Feuille, couche électrolytique solide/ gélifiée/ liquide
- 40-: Film polyester métallisé sous vide
- 41-: Anode 42- Cathode 43- Plancher
- 44-: Accumulateur thermique 45- Plaque de doublage
- 46-: Ossature cloison doublage
- 47-: Panneaux photovoltaïques / panneaux solaires
- 48-: Toiture 49- Jardin intérieur 50- Véranda
- 51-: Arbre feuillu 52- Pan de toit intérieur
- 53-: Captage de l'air neuf par la ventilation mécanisée
- 54-: Excavation/ terre végétale
- 55-: Chapeau de fermeture supérieure de la coque
- @ -: Ordinateur de liaison internet
- +: et - : Borne positive et négative d'alimentation électrique Symbole de la cloche (Figure 4) : Alarme entrée d'air

## Revendications

1. Superstructure de bâtiment autostable constituée d'un volume global (1) formé par une pluralité de plaques rigides jointives (3) formant une enveloppe externe qui englobe tout le bâtiment et de pièces d'habitation ou d'accueil, également constituées par une pluralité de plaques rigides jointives (3) formant un ou plusieurs sous-volumes (2),
**caractérisée en ce que** le volume global (1) de la superstructure est rempli de granules légers rigides sensiblement sphériques (4) versés en vrac sans aucun liant, dans lesquels ledit ou lesdits sous-volumes ou pièces d'habitation (2) sont immergés, où le volume de granules entre le volume global (1) et ledit ou lesdits sous-volumes (2) est mis sous vide de tout gaz, cette mise sous vide permettant de rigidifier et de rendre isolante ladite superstructure, chaque sous-volume étant isolé physiquement, phoniquement et thermiquement, indépendamment des autres sous-volumes au sein du volume global.

2. Superstructure de bâtiment autostable selon la revendication 1, **caractérisée en ce que** l'enveloppe externe de la superstructure et les parois des pièces d'habitation sont composées de plaques rigides (3) extrudées ou laminées ou moulées dans une matière stratifiée ou non, d'origine minérale et/ou végétale et/ou pétrochimique ; les granules pressés par l'enveloppe externe et par les plaques en vis-à-vis de ladite enveloppe forment une coque continue dite en cocon.

3. Superstructure de bâtiment autostable selon la revendication 2 , **caractérisée en ce que** les granules légers rigides (4) versés en vrac, qui remplissent le volume interne de la coque, des murs de refend et des planchers, sans aucun liant pour les agglomérer, sont, soit un géopolymère expansé, soit de l'argile ou du verre expansé, soit des noyaux de fruits rigides et durs, tous les granules artificiels sensiblement sphériques, poreux ou creux, rigides et durs, peuvent être utilisés.

4. Superstructure de bâtiment autostable selon la revendication 2, **caractérisée en ce que** les plaques (3) ont leur face interne à la coque, aux murs de refend et aux planchers, garnie d'une pluralité de nervures (5) parallèles entre elles, en forme d'ondulations ou de dents de pignon-crémaillère, la direction de ces nervures est orthogonale aux contraintes de cisaillement qui s'exercent sur la coque, sur les murs de refend et sur les planchers ; ces nervures encastrées dans les granules dont le volume est rigidifié par le vide de gaz, permettent le contreventement des parois.

5. Superstructure de bâtiment autostable, selon l'une quelconque des revendications 2 à 4, **caractérisée en ce que** l'enveloppe externe de la coque est haubanée de l'intérieur par des haubans (20) noyés dans les granules ; les parois des pièces d'habitation sont chaînées de l'intérieur de la coque, des murs de refend et des planchers, par des câbles (19) noyés dans les granules.

6. Superstructure de bâtiment autostable selon l'une quelconque des revendications 2 à 4, **caractérisée en ce que** dans chaque embrasure pratiquée dans la coque, dans les murs de refend et dans les planchers est encastré un bloc-baie étanche aux gaz (9) dont la forme de l'encastrement extérieur est conique ; ledit bloc-baie est maintenu en place uniquement par la dépression qui s'exerce sur ses faces extérieures encastrées, ceci sans fixation mécanique ou chimique.

7. Superstructure de bâtiment autostable selon l'une quelconque des revendications 1 à 6, **caractérisée en ce qu'**une peau étanche aux gaz (8) couvre la totalité des surfaces externes de l'enveloppe de la superstructure et des parois des pièces d'habitation ou d'accueil.

8. Superstructure de bâtiment autostable selon l'une quelconque des revendications 2 à 7, **caractérisée en ce que** le volume de la coque, des murs de refend et des planchers est soumis à un vide de gaz inférieur à 1 hPa, ce vide est contrôlé par une pompe à vide (10) installée in situ de façon permanente, un seul orifice d'aspiration des gaz est nécessaire et suffisant pour la totalité de la superstructure ; le volume sous vide de la coque, des murs de refend et des planchers est délimité par la peau étanche aux gaz (8) et les faces extérieures encastrées des blocs-baies (9).

9. Superstructure de bâtiment autostable selon la revendication 8, **caractérisée en ce que** la pompe à vide (10) est placée avantageusement à l'intérieur de la superstructure, elle est équipée d'un système de détection et d'alarme relié au réseau informatique mondial (@) afin de prévenir tout fonctionnement trop important de ladite pompe.

10. Superstructure de bâtiment autostable selon la revendication 7, **caractérisée en ce que** la peau étanche aux gaz (8) est constituée de feuilles de papier de grammage 250 à 600 gr/m² (36), étanchéifiées sur leur face côté plaque (3) par une couche de Copolymère d'Éthylène/ Alcool Vinylique (EVOH), le papier (36) est rendu incombustible et non dégradable par absorption à chaud de la face côté externe par un chloroalcane à chaîne moyenne ou longue.

11. Superstructure de bâtiment autostable selon la revendication 7, **caractérisée en ce que** la peau étanche (8) est démontable ;
pour cela, à chaque plaque (3) correspond une feuille isolée de forme et de dimensions identiques à la plaque ;
ces feuilles sont reliées entre elles par leurs bordures pliées et relevées suivant un angle à profil en V (12) et (13), les ouvertures pratiquées dans lesdites feuilles sont reliées aux blocs-baies étanches aux gaz (9) par leurs bordures pliées et relevées en angle droit (14) ;
les bordures à angle en V fermé (12) sont destinées aux angles saillants formés entre deux feuilles, les bordures à angle en V ouvert (13) sont destinées aux angles rentrants formés entre deux feuilles ;
entre lesdites bordures jointives est insérée une mince couche élastomère d'étanchéification ;
le périmètre des bordures (12) et (13) correspond au périmètre des plaques (3), le périmètre des bordures (14) correspond au périmètre des ouvertures pratiquées dans les feuilles et au périmètre des embrasures pratiquées dans les plaques (3) ;
les bordures jointives (12) ou (13) des feuilles qui sont bord à bord sont pressées entre elles par des pinces-ressorts à profil en forme de lettre oméga majuscule Ω (23), chaque pince-ressort Ω a sensiblement la longueur de chacune des rives des feuilles et des plaques (3) ; les bordures à angle droit (14) sont jointives avec les faces extérieures des blocs-baies, elles sont pressées sur les faces du bloc-baie par des plaques de serrage vissées dessus ;
une agrafe tripode (24) pince les trois bordures jointives dans les angles des sous-volumes (2) et du volume global (1) ;
les angles des bordures relevées sont étanchéifiés par des pièces moulées (33) (34) (35), collées dans chaque angle intérieur sur les bordures (12) et (13), et dans chaque angle extérieur sur les bordures (14) .

12. Superstructure de bâtiment autostable selon la revendication 7, **caractérisée en ce que**, entre la peau étanche (8) et les plaques (3), est insérée une superposition de films minces polymères métallisés (40) et recouverts de couches à polarisation ionique (38), des couches (39) ou feuilles séparatrices électrolytiques sont intercalées entre les couches à polarisation ionique.

13. Superstructure de bâtiment autostable selon la revendication 12, **caractérisée en ce que** les couches superposées à polarisation ionique et séparatrices électrolytiques constituent des accumulateurs électrochimiques sous vide de gaz stockant une charge électrochimique en très basse tension continue de sécurité, ou bien constituent des supercondensateurs sous vide de gaz stockant une charge électrostatique ; l'électricité en très basse tension continue de sécurité est prélevée directement sur la peau-accumulateur (8) derrière les cloisons de doublage, sans distribution par un tableau de répartition ni un circuit électrique.

14. Superstructure de bâtiment autostable selon la revendication 1, **caractérisée en ce qu'**elle comprend en son centre une ouverture ou jardin intérieur (49) ; pour cela la couverture est ouverte en son centre, l'assise est ouverte à l'aplomb de l'ouverture de la couverture, les ouvertures de l'assise et de la couverture sont de forme et de dimensions sensiblement égales ; la superstructure est couverte par des panneaux de bardage (30), des panneaux photovoltaïques et/ou des panneaux solaires (47), des toitures (48) et des pans de toit (52).

15. Superstructure de bâtiment autostable selon la revendication 14, **caractérisée en ce que** les trois pans de toit (52) situés côtés ouest [W], nord [N], est (E) dans l'hémisphère Nord ; côtés est (E), sud [S], ouest [W] dans l'hémisphère Sud, en pente descendante vers ladite ouverture centrale, sont en tout ou partie composés de panneaux photovoltaïques et/ou de panneaux solaires (47).

## Patentansprüche

1. Selbststehende Gebäudeüberstruktur, die von einem Gesamtvolumen (1) gebildet wird, das von einer Vielzahl von aneinanderstoßenden steifen Platten (3) gebildet wird, die ein Außengehäuse bilden, welches das gesamte Gebäude und Wohn- oder Empfangsräume umfasst, die ebenfalls von einer Vielzahl von aneinanderstoßenden steifen Platten (3) gebildet werden, die ein oder mehrere Teilvolumen (2) bilden,
**dadurch gekennzeichnet, dass** das Gesamtvolumen (1) der Überstruktur gefüllt ist mit leichtem, steifem, im Wesentlichen kugeligem Granulat (4), das lose, ohne jegliches Bindemittel geschüttet wird, in dem das oder die Teilvolumen oder Wohnräume (2) versenkt sind, wobei aus dem Volumen des Granulats zwischen dem Gesamtvolumen (1) und dem oder den Teilvolumen (2) jegliches Gas evakuiert wird, wobei diese Evakuierung es ermöglicht, die Überstruktur zu versteifen und isolierend zu machen, wobei jedes Teilvolumen physikalisch, akustisch und thermisch isoliert wird, unabhängig von den anderen Teilvolumen innerhalb des Gesamtvolumens.

2. Selbststehende Gebäudeüberstruktur nach Anspruch 1, **dadurch gekennzeichnet, dass** das Außengehäuse der Überstruktur und die Wände der Wohnräume aus steifen Platten (3) bestehen, die extrudiert oder laminiert oder in einem Schichtwerkstoff geformt werden oder nicht, mineralischen und/oder pflanzlichen und/oder petrochemischen Ursprungs; wobei das Granulat, das von dem Außengehäuse und von den gegenüberliegenden Platten des Gehäuses gepresst wird, eine kokonartige kontinuierliche Hülle bildet.

3. Selbststehende Gebäudeüberstruktur nach Anspruch 2, **dadurch gekennzeichnet, dass** das lose geschüttete, leichte, steife Granulat (4), welches das Innenvolumen der Hülle, der Zwischenwände und der Decken füllt, ohne jegliches Bindemittel zum Verdichten, entweder ein expandiertes Geopolymer ist, oder Ton oder Blähglas, oder steife und harte Obstkerne, wobei jedes künstliche, im Wesentlichen kugelige, poröse oder hohle, steife und harte Granulat verwendet werden kann.

4. Selbststehende Gebäudeüberstruktur nach Anspruch 2, **dadurch gekennzeichnet, dass** die Platten (3) eine nach innen zu der Hülle, den Zwischenwänden und den Decken gewandte Fläche aufweisen, die mit einer Vielzahl von zueinander parallelen Rippen (5) in Form von Wellen oder Zähnen eines Zahnstangen-Ritzels versehen ist, wobei die Richtung dieser Rippen orthogonal zu den Scherbeanspruchungen verläuft, die auf die Hülle, die Zwischenwände und die Decken ausgeübt werden; wobei diese Rippen, die in das Granulat eingelassen sind, dessen Volumen durch das Gasvakuum versteift wird, die Aussteifung der Wände ermöglichen.

5. Selbststehende Gebäudeüberstruktur nach einem der Ansprüche 2 bis 4, **dadurch gekennzeichnet, dass** das Außengehäuse der Hülle von innen durch Abspannungen (20) abgespannt wird, die in dem Granulat eingebettet sind; wobei die Wände der Wohnräume vom Inneren der Hülle, der Zwischenwände und der Decken durch Seile (19) verkettet sind, die in dem Granulat eingebettet sind.

6. Selbststehende Gebäudeüberstruktur nach einem der Ansprüche 2 bis 4, **dadurch gekennzeichnet, dass** in jeder Wandöffnung, die in der Hülle, den Zwischenwänden und den Decken ausgeführt ist, ein gasdichtes Rahmenbauteil (9) eingebaut ist, dessen äußere Einbauform konisch ist; wobei das Rahmenbauteil ausschließlich durch den Unterdruck in Position gehalten wird, der auf seine eingebauten Außenflächen ausgeübt wird, dies ohne mechanische oder chemische Befestigung.

7. Selbststehende Gebäudeüberstruktur nach einem der Ansprüche 1 bis 6, **dadurch gekennzeichnet, dass** eine gasdichte Haut (8) die Gesamtheit der Außenoberflächen des Gehäuses der Überstruktur und der Wände der Wohn- oder Empfangsräume bedeckt.

8. Selbststehende Gebäudeüberstruktur nach einem der Ansprüche 2 bis 7, **dadurch gekennzeichnet, dass** das Volumen der Hülle, der Zwischenwände und der Decken einem Gasvakuum von weniger als 1 hPa ausgesetzt ist, dieses Vakuum von einer Vakuumpumpe (10) geregelt wird, die vor Ort permanent installiert ist, eine einzige Gasansaugöffnung für die Gesamtheit der Überstruktur erforderlich und ausreichend ist; wobei das Vakuumvolumen der Hülle, der Zwischenwände und der Decken von der gasdichten Haut (8) und den eingebauten Außenflächen der Rahmenbauteile (9) begrenzt wird.

9. Selbststehende Gebäudeüberstruktur nach Anspruch 8, **dadurch gekennzeichnet, dass** die Vakuumpumpe (10) vorteilhafterweise innerhalb der Überstruktur angeordnet ist, sie mit einem Erkennungs- und Alarmsystem ausgestattet ist, das mit dem Internet (@) verbunden ist, um jegliche Überfunktion der Pumpe zu melden.

10. Selbststehende Gebäudeüberstruktur nach Anspruch 7, **dadurch gekennzeichnet, dass** die gasdichte Haut (8) von Papierbögen mit einer Grammatur von 250 bis 600 g/m² (36) gebildet wird, die auf ihrer plattenseitigen (3) Fläche durch eine Schicht aus EthylenVinylalkohol-Copolymer (EVOH) abgedichtet sind, das Papier (36) unbrennbar und nicht abbaubar durch Wärmeabsorption der außenseitigen Fläche durch ein mittel- oder langkettiges Chlorparaffin gemacht wird.

11. Selbststehende Gebäudeüberstruktur nach Anspruch 7, **dadurch gekennzeichnet, dass** die dichte Haut (8) demontierbar ist;
wobei dazu jeder Platte (3) ein isolierter Bogen mit einer Form und Dimensionen entspricht, die mit der Platte identisch sind;
wobei diese Bögen untereinander durch ihre umgebogenen und gemäß einem Winkel mit V-Profil (12) und (13) angehobenen Ränder verbunden sind, die in den Bögen ausgeführten Öffnungen mit den gasdichten Rahmenbauteilen (9) durch ihre umgebogenen und rechtwinkelig angehobenen Ränder (14) verbunden sind;
wobei die Ränder mit geschlossenem V-Winkel (12) für die Außenecken bestimmt sind, die zwischen zwei Bögen gebildet werden, die Ränder mit offenem V-Winkel (13) für die Innenecken bestimmt sind, die zwischen zwei Bögen gebildet werden;
wobei zwischen den aneinanderstoßenden Rändern eine dünne Elastomerschicht zur Abdichtung eingefügt wird;
wobei der Umfang der Ränder (12) und (13) dem Umfang der Platten (3) entspricht, der Umfang der Ränder (14) dem Umfang der in den Bögen ausgeführten Öffnungen und dem Umfang der in den Platten (3) ausgeführten Wandöffnungen entspricht;
wobei die aneinanderstoßenden Ränder (12) oder (13) der Bögen, die Kante an Kante liegen, durch Federklemmen mit einem Profil in der Form des Großbuchstaben Omega Ω (23) zusammengepresst werden, jede Ω-Federklemme im Wesentlichen die Länge jeder der Endkanten der Bögen und der Platten (3) aufweist;
wobei die Ränder mit rechtem Winkel (14) mit den Außenflächen der Rahmenbauteile aneinanderstoßen, sie auf die Flächen des Rahmenbauteils durch aufgeschraubte Befestigungsplatten gepresst werden;
wobei eine Dreifußklammer (24) die drei aneinanderstoßenden Ränder in den Winkeln der Teilvolumen (2) und des Gesamtvolumens (1) klemmt;
wobei die Winkel der angehobenen Ränder durch Formteile (33) (34) (35) abgedichtet werden, die in jedem Innenwinkel auf die Ränder (12) und (13) und in jedem Außenwinkel auf die Ränder (14) geklebt werden.

12. Selbststehende Gebäudeüberstruktur nach Anspruch 7, **dadurch gekennzeichnet, dass** zwischen der dichten Haut (8) und den Platten (3) eine Übereinanderlagerung von dünnen Polymerfolien (40) eingefügt ist, die metallisiert und von Schichten mit ionischer Polarisation (38) bedeckt sind, wobei elektrolytische Trennschichten (39) oder -bögen zwischen den Schichten mit ionischer Polarisation eingeschoben sind.

13. Selbststehende Gebäudeüberstruktur nach Anspruch 12, **dadurch gekennzeichnet, dass** die übereinandergelagerten Schichten mit ionischer Polarisation und die elektrolytischen Trennschichten gasevakuierte elektrochemische Akkumulatoren bilden, die eine elektrochemische Ladung mit einer kontinuierlichen, sehr niedrigen Sicherheitsspannung speichern, oder auch gasevakuierte Superkondensatoren bilden, die eine elektrostatische Ladung speichern; wobei der Strom mit der kontinuierlichen, sehr niedrigen Sicherheitsspannung direkt auf der Akkumulatorhaut (8) hinter den Vorsatzschalen entnommen wird, ohne Verteilung durch einen Installationsverteiler oder einen Stromkreis.

14. Selbststehende Gebäudeüberstruktur nach Anspruch 1, **dadurch gekennzeichnet, dass** sie in ihrem Zentrum eine Öffnung oder einen Innengarten (49) umfasst; wofür die Abdeckung in ihrem Zentrum geöffnet wird, das Fundament in der Lotrichtung der Öffnung der Abdeckung geöffnet wird, wobei die Öffnungen des Fundaments und der Abdeckung im Wesentlichen die gleiche Form und gleichen Abmessungen aufweisen; wobei die Überstruktur von Verkleidungspaneelen (30), Photovoltaikpaneelen und/oder Solarpaneelen (47), Bedachungen (48) und Dachflächen (52) bedeckt ist.

15. Selbststehende Gebäudeüberstruktur nach Anspruch 14, **dadurch gekennzeichnet, dass** die drei Dachflächen (52), die sich auf den West- [W], Nord- [N], Ostseiten (E) auf der Nordhalbkugel, den Ost- (E), Süd- [S], Westseiten (W) auf der Südhalbkugel befinden, in zur zentralen Öffnung abfallender Neigung, zur Gänze oder zum Teil aus Photovoltaikpaneelen und/oder Solarpaneelen (47) bestehen.

## Claims

1. Self-standing building superstructure consisting of an overall volume (1) formed by a plurality of contiguous rigid plates (3) forming an outer envelope which encompasses the entire building, and of dwelling or reception rooms, also formed by a plurality of contiguous rigid plates (3) forming one or several sub-volumes (2);
**characterized in that** the overall internal volume (1) of the superstructure is filled with substantially spherical, rigid lightweight granules (4) scattered without any binder, in which at least one of the said sub-volume or dwelling rooms (2) is immersed, in which the volume of granules between the overall volume (1) and at least one of the said sub-volume (2) is under vacuum, this gas-vacuum enabling the said superstructure to stiffen and to become insulating, each sub-volume being physically, phonetically and thermally isolated, independently of the other sub-volumes within the overall volume.

2. Self-standing building superstructure according to claim 1, **characterized in that** the outer casing of the superstructure and the walls of the dwelling rooms are composed of rigid plates (3) extruded or laminated or molded in a laminated material or not, of mineral and / or plant and / or petrochemical origin; the granules pressed by the outer casing and the plates facing the said outer casing form a so-called « cocoon » continuous shell.

3. Self-standing building superstructure according to claim 2, **characterized in that** the lightweight granules are scattered (4), and fill the internal volume of the shell, the walls and the floors, without any binder to agglomerate them, they are either an expanded geopolymer, or expanded clay or foam glass, or hard, stiff fruit cores, any substantially spherical, porous or hollow, rigid and hard artificial granules can be used.

4. Self-standing building superstructure according to claim 2, **characterized in that** plates (3) have their internal face turned to the shell, the load-bearing walls and the floors, lined with a plurality of ribs (5) parallel to one another, in the form of corrugations or gear rack teeth, the direction of these ribs is orthogonal to the shear stresses acted on the shell, the inner load-bearing walls and the floors; these ribs, embedded in the granules and whose volume is stiffened by the gas-vacuum, allow wind-braced walls.

5. Self-standing building superstructure according to any one of claims 2 to 4, **characterized in that** the outer casing of the shell is guyed from the inside by tie rods (20) embedded in the granules; the walls of the dwelling rooms are chained from the inside of the shell, the inner load-bearing walls and the floors, by cables (19) embedded in the granules.

6. Self-standing building superstructure according to any one of claims 2 to 4, **characterized by** the fact that, in each opening made in the shell, the inner load-bearing walls and the floors is embedded a gas-tight bay-frame or opening-frame (9) whose external installation's housing shape is conical; the said bay-frame is held in place by the gas-vacuum only, which is exerted on its embedded outer faces, without any mechanical or chemical fixation.

7. Self-standing building superstructure according to one of claims 1 to 6, **characterized in that** a gas-tight skin (8) clads all the external surfaces of the superstructure's outer casing and the walls of the dwelling or public rooms.

8. Self-standing building superstructure according to any one of claims 2 to 7, **characterized in that** the volume of the shell, the inner load-bearing walls and the floors is subjected to a gas-vacuum of less than 1 hPa, this vacuum is controlled by a vacuum pump (10) which is installed in situ on a permanent basis, a single gas suction port is necessary and sufficient for the entire superstructure; the gas-vacuum volume of the shell, the walls and the floors is delimited by the gas-tight skin (8) and the embedded outer faces of the bay-frame or opening-frame (9).

9. Self-standing building superstructure according to claim 8, **characterized in that** the vacuum pump (10) is advantageously placed inside the superstructure, it is equipped with a detection and alarm system connected to the worldwide computer network (@) to prevent excessive operation of the said pump.

10. Self-standing building superstructure according to claim 7, **characterized in that** a gas-tight skin (8) consists of sheets of paper whose grammage is 250 to 600 gr / m² (36), sealed on their plate-side face (3) by a layer of Ethylene Copolymer / Vinyl Alcohol (EVOH); hot absorption of the outer side, with a medium or long chained chloroalkane, makes the paper (36) both incombustible and nondegradable.

11. Self-standing building superstructure according to claim 7, **characterized in that** a gas-tight skin (8) is removable;
for this, each plate (3) corresponds to an insulated sheet whose shape and dimensions are identical to the plate;
these sheets are interconnected by their folded edges and raised at a V-shaped angle (12) and (13), the openings in the said sheets are connected to the gas-tight bay-frames (9) by their folded edges and raised at right angles (14);
the closed V-angle curbs (12) are intended for the salient angles formed between two sheets, the open V-shaped curbs (13) are intended for the reentrant angles formed between two sheets;
a thin elastomeric gas-tight layer is inserted between these adjacent edges;
the perimeter of borders (12) and (13) corresponds to the perimeter of the plates (3), the perimeter of the borders (14) corresponds to the perimeter of the openings made in the sheets and to the perimeter of the opening made in the plates (3);
the contiguous edges [12] or [13] of the sheets which are edge-to-edge are pressed together by Ω-shaped profile spring clamps (23), the length of each spring clamp Ω being substantially equal to the length of each edge of the sheets and plates (3);
the right-angled edges (14) are contiguous with the outer faces of the bay-frame, they are pressed on the bay-frames' faces by clamping plates screwed at the top;
a tripod staple (24) clamps the three contiguous edges into the corners of the sub-volumes (2) and the overall volume (1);
the corners of the raised edges are gas-tight by molded parts (33) (34) (35) glued, in each inner corner, to the borders (12) and (13), and in each outer corner to the edges (14).

12. Self-standing building superstructure according to claim 7, **characterized by** the insertion, between the gas-tight skin (8) and the plates (3), of a superposition of metallized polymeric thin films (40), cladded with ion-polarized layers (38), layers (39) or electrolytic separator sheets are interposed between the ion-polarized layers.

13. Self-standing building superstructure according to claim 12, **characterized in that** electrolytic separating and ion-polarization superposed layers constitute vacuum electrochemical accumulator cells of gas storing an electrochemical charge at a very low direct current safety voltage, or constitute vacuum supercapacitors of gas storing an electrostatic charge; the DC extra low-voltage is taken directly from the skin-accumulator (8) behind the lining partitions, without any switchboard or electrical distribution.

14. Self-standing building superstructure according to claim 1, **characterized in that** it includes an open-air interior garden (49) in the center; for this purpose, the roof is open in its center just like the floor base, which is also open to match the opening of the roof, both openings are of substantially equal shape and size; the superstructure is covered by cladding panels (30), photovoltaic panels and/or solar panels (47), roofs (48) and an interior slanting roof (52).

15. Self-standing building superstructure according to claim 14, **characterized in that** the three interior slanting roofs (52) located on the west [W], north [N], east (E) sides in the Northern hemisphere; or on the east (E), south [S], west (W) sides in the Southern hemisphere, slope down to the said central opening, completely or partially composed of photovoltaic panels and/or solar panels (47).
